(19) Europäisches Patentamt
European Patent Office
Office européen des brevets

(11) **EP 1 690 131 B1**

(12) **FASCICULE DE BREVET EUROPEEN**

(45) Date de publication et mention
de la délivrance du brevet:
**15.01.2014 Bulletin 2014/03**

(21) Numéro de dépôt: **04805551.1**

(22) Date de dépôt: **25.11.2004**

(51) Int Cl.:
***G02F 1/139*** *(2006.01)*

(86) Numéro de dépôt international:
**PCT/FR2004/003022**

(87) Numéro de publication internationale:
**WO 2005/054941 (16.06.2005 Gazette 2005/24)**

(54) **DISPOSITIF D'AFFICHAGE A ECRAN DE TYPE NEMATIQUE BISTABLE OPTIMISANT LE NOIR ET PROCEDE DE DEFINITION DE CE DISPOSITIF**

DISPLAY-EINRICHTUNG MIT EINEM SCHWARZOPTIMIERENDEN BISTABILEN NEMATISCHEN SCHIRM UND VERFAHREN ZUR DEFINITION DER EINRICHTUNG

DISPLAY DEVICE WITH A BLACK-OPTIMIZING BISTABLE NEMATIC SCREEN AND METHOD FOR THE DEFINITION OF SAID DEVICE

(84) Etats contractants désignés:
**AT BE BG CH CY CZ DE DK EE ES FI FR GB GR HU IE IS IT LI LU MC NL PL PT RO SE SI SK TR**

(30) Priorité: **28.11.2003 FR 0313992**

(43) Date de publication de la demande:
**16.08.2006 Bulletin 2006/33**

(73) Titulaire: **France Brevets
75009 Paris (FR)**

(72) Inventeurs:
• **JOUBERT, Cécile
F-91400 Orsay (FR)**
• **STOENESCU, Daniel
F-91400 Orsay (FR)**
• **CARTON, Alexandre
F-62100 Calais (FR)**
• **DAVI, Patrice
F-92310 Sevres (FR)**

(74) Mandataire: **Joubert, Cécile
Marks & Clerk France
Counseils en Propriete Industrielle
Immeuble "Visium"
22, avenue Aristide Briand
94117 Arcueil Cedex (FR)**

(56) Documents cités:
**EP-A- 1 026 542     US-A- 4 815 802**

• GUO J-X ET AL: "THREE-TERMINAL BISTABLE TWISTED NEMATIC LIQUID CRYSTAL DISPLAYS" APPLIED PHYSICS LETTERS, AMERICAN INSTITUTE OF PHYSICS. NEW YORK, US, vol. 77, no. 23, 4 décembre 2000 (2000-12-04), pages 3716-3718, XP000994273 ISSN: 0003-6951 cité dans la demande
• ZHUANG Z ET AL: "BISTABLE TWISTED NEMATIC LIQUID-CRYSTAL OPTICAL SWITCH" APPLIED PHYSICS LETTERS, AMERICAN INSTITUTE OF PHYSICS. NEW YORK, US, vol. 75, no. 19, 8 novembre 1999 (1999-11-08), pages 3008-3010, XP000875975 ISSN: 0003-6951
• MARTINOT-LAGARDE P ET AL: "The Binem(R) display, a nematic bistable device switched by surface anchoring breaking" PROCEEDINGS OF THE SPIE, SPIE, BELLINGHAM, VA, US, vol. 5003, 21 janvier 2003 (2003-01-21), pages 25-34, XP002317405 ISSN: 0277-786X
• JOUBERT C. ET AL: "Ultra low power bright reflective displays using BiNem<(R)> technology fabricated by standard manufacturing equipment", 2002 SID INTERNATIONAL SYMPOSIUM DIGEST OF TECHNICAL PAPERS, vol. 1, 21 May 2002 (2002-05-21), pages 30-33, XP002287058, SAN JOSE, CA : SID, US

EP 1 690 131 B1

**Description**

**DOMAINE DE L'INVENTION**

La présente invention concerne le domaine des dispositifs d'affichage à cristal liquide et plus précisément la configuration optique d'un afficheur nématique bistable fonctionnant selon un mode optique qui optimise l'état noir de cet afficheur.

**BUT DE L'INVENTION**

Le but de l'invention est d'obtenir un afficheur bistable avec un état noir de très bonne qualité, c'est à dire un afficheur ayant dans cet état une très faible transmission optique, tout en tenant compte de certaines contraintes susceptibles d'être imposées à la cellule.

Généralement le mode optique pour lequel la qualité du noir est prépondérante est le mode transmissif, mais les configurations optiques calculées ici permettent également de réaliser un écran fonctionnant selon un mode transflectif ou réflectif.

**ETAT DE LA TECHNIQUE**

**Afficheur à cristal liquide bistable commutant entre deux textures différant de 180°**

Le type d'afficheur à cristal liquide bistable considéré dans cette invention est un afficheur qui commute entre deux textures, stables sans champ électrique appliqué (d'où sa bistabilité), différent entre elles d'un angle de $\pi$. Pour l'une des textures, l'ange $\phi_U$ que font les directeurs des molécules de cristal liquide sur les deux surfaces de la cellule entre eux, est de l'ordre de 0 à $\pm$20°. Les molécules restent presque parallèles entre elles, et nous appellerons cette texture U. La seconde texture T présente un angle de torsion $\phi_T = \phi_U \pm \pi$. Les molécules effectuent, dans cette texture T, une rotation d'environ $\pm$180° ($\pm$ 20°) entre les deux surfaces de la cellule.

Le cristal liquide nématique est chiralisé de façon à présenter un pas spontané $p_0$ proche de quatre fois l'épaisseur d de la cellule, pour égaliser les énergies des deux textures. Le rapport entre l'épaisseur d de la cellule et le pas spontané $p_0$, soit $d/p_0$, est donc environ égal à 0,25 +/- 0,1, de préférence 0,25 $\pm$ 0,005. Sans champ électrique, ce sont les états d'énergie minimale.

A ce jour deux afficheurs utilisant ce principe ont été décrits.

Le document [1] décrit un afficher qui réalise une commutation entre les deux textures U et T en appliquant une impulsion de champ électrique de forme précise. Cet afficheur est basé sur une cassure de l'ancrage zénithal de la molécule de cristal liquide, sur une des surfaces d'alignement (documents [2] et [3]), c'est à dire que la molécule est levée par le champ électrique avant de retomber d'un côté ou de l'autre, permettant ainsi l'obtention des deux textures U et T. Dans ce cas, la structure des électrodes nécessaires à l'application du champ est standard, identique à celle utilisée pour les afficheurs cristaux liquides de type TN ou STN. Cet afficheur est dénommé généralement BiNem®.

Le document [4] décrit un afficher qui utilise également une cassure d'ancrage et un type particulier d'électrodes (dénommé « comb shaped électrodes »), permettant d'obtenir une composante du champ électrique latéral, c'est à dire parallèle au substrat. La commutation entre les deux textures est effectuée dans ce cas par un effet qualifié par l'auteur de cassure d'ancrage azimutal (documents [5] et [6]).

La méthode de commutation n'est pas essentielle pour la présente invention. En effet quelque soit le mode de commutation (cassure d'ancrage zénithal ou azimutal), les textures des molécules de cristal liquide sont les mêmes, la commutation s'opérant entre deux textures tordues, l'une faiblement tordue d'angle $\phi_U$, nommée U, et l'autre fortement tordue d'angle $\phi_T = \phi_U \pm \pi$ prénommée T. Et le comportement optique de l'afficheur dépend uniquement des textures des molécules de cristal liquide.

**Modes optiques de tels afficheurs**

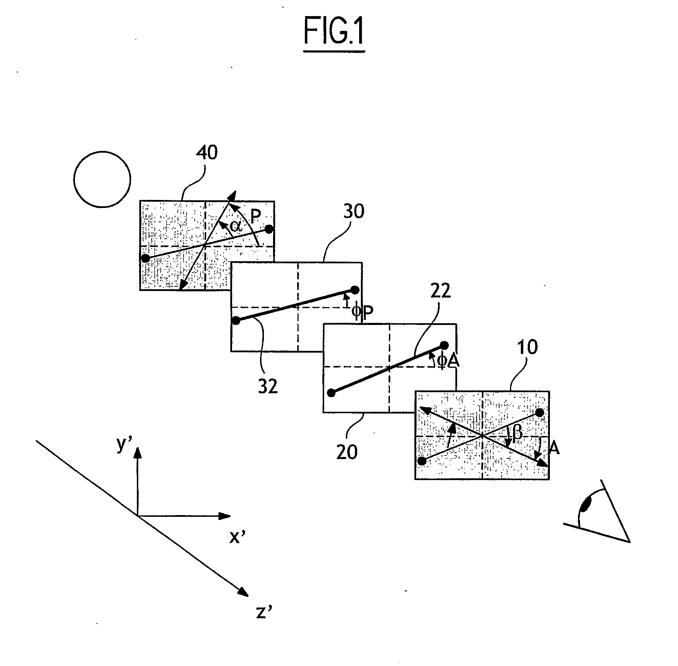

On a schématisé sur la figure 1 annexée un afficheur à cristal liquide du type décrit précédemment, auquel peut s'appliquer la présente invention.

Cet afficheur comprend :

- un polariseur analyseur 10 côté observateur,
- deux plaques 20, 30 confinant les molécules de cristal liquide nématique séparées d'une distance d, et
- un polariseur 40 disposé sur l'arrière de l'afficheur, soit à l'opposé de l'observateur.

On a représenté sur la figure 1 un repère orthonormé x', y' z', dont les directions x' et y' définissent un plan perpendiculaire à la direction de propagation des rayons lumineux et z' est parallèle à cette direction de propagation.

Le directeur nématique des molécules sur la plaque 20 (c'est à dire la direction d'ancrage sur cette plaque 20) est référencé 22. Le directeur nématique sur la plaque 30 est référencé 32.

Les ancrages sur les plaques 20 et 30 sont adaptés pour permettre une commutation des molécules de cristal liquide nématique entre deux états respectivement stables U et T, qui diffèrent entre eux d'une torsion de l'ordre de $\pi$, par application de signaux électriques appliqués sur des électrodes prévues sur les plaques 20 et 30, selon les modalités connues décrites dans les documents précités.

Une telle cellule est caractérisée par :

- son retard $\Delta$nd, produit de la différence d'indice $\Delta$n du cristal liquide par l'épaisseur d de la cellule,
- sa torsion $\phi$,
- les angles P et A que font respectivement le polariseur arrière 40 ou P d'entrée et le polariseur analyseur 10 ou A de sortie (analyseur) avec un repère fixe (qui selon la figure 1 coïncide arbitrairement avec l'axe x').

Le polariseur de sortie 10, situé du côté de l'observateur est toujours de type transmissif. Le mode optique est déterminé par la nature du polariseur arrière 40:

- En mode purement transmissif, l'écran opère comme une diapositive, l'architecture optique est : source - écran - observateur. Le polariseur 40 est de type transmissif.
- En mode transflectif, le polariseur 40 est transflectif , c'est à dire partiellement réfléchissant : une partie de la lumière polarisée est transmise, l'autre partie est réfléchie. Cela permet à l'écran de fonctionner soit en mode transmissif lorsqu'il est éclairé par une source arrière, soit en mode réflectif utilisant la lumière ambiante comme source de lumière lorsqu'il n'est pas rétroéclairé.
- En mode réflectif le polariseur 40 est de type réflectif. L'écran est alors exclusivement éclairé par la lumière ambiante réfléchie par ce polariseur 40.

Les documents [4] et [6] calculent un mode optique transmissif pour une longueur d'onde précise permettant d'obtenir pour cette longueur d'onde (par exemple 550 nm), simultanément une transmission optique T=0 pour une des deux textures (état noir) et une transmission optique T=1 pour l'autre texture. Les auteurs obtiennent par le calcul plusieurs ensembles de valeurs des caractéristiques de la cellule ($\Delta$nd, $\phi$, P et A). L'ensemble des valeurs correspondant au retard optique $\Delta$nd le plus faible est donné sur le tableau 1 annexé.

Ce calcul des valeurs optimales est effectué à l'aide de la forme analytique de la transmission optique d'une cellule cristal liquide en fonction des paramètres $\Delta$nd, $\phi$, P et A, donnée dans de nombreuses publications (documents [7] ou [8] par exemple).

La formule donnée dans le document [8] est la suivante :

$$T(\phi,\lambda) = \cos^2(\alpha+\beta) - \cos^2 X \cos 2\alpha \cos 2\beta \left[\frac{\phi}{X}\tan X - \tan 2\alpha\right]\left[\frac{\phi}{X}\tan X + \tan 2\beta\right]$$

$$[1]$$

avec

$$X(\phi,\lambda) = \sqrt{\phi^2 + \left(\frac{\pi\Delta nd}{\lambda}\right)^2} \qquad\qquad [2]$$

Dans cette formule $\alpha$ et $\beta$ sont les angles que font respectivement le polariseur 40 et l'analyseur 10 avec le directeur du cristal liquide 32, 22 respectivement situé du même côté.

Soit $\phi_P$ et $\phi_A$ les angles que font les directeurs 32 et 22 avec l'axe x' du repère x'y'z'.

Alors : P=$\alpha$ + $\phi_P$ et A = $\beta$ + $\phi_A$ (voir figure 1)

La valeur de la torsion de la texture de la cellule de cristal liquide est obtenue en effectuant la différence entre le directeur 22 du cristal liquide sur une des faces de la cellule et le directeur 32 sur l'autre face : $\phi = \phi_A - \phi_P$.

La formule [1] peut être également obtenue en fonction de A et P au lieu de $\alpha$ et $\beta$. Pour une simplification des notations, nous prendrons le directeur 32 du cristal liquide côté polariseur 40 selon x' soit $\phi_P = 0$ et $\phi_A = \phi$ d'où :

$$P = \alpha \ \text{et} \ A = \beta + \phi$$

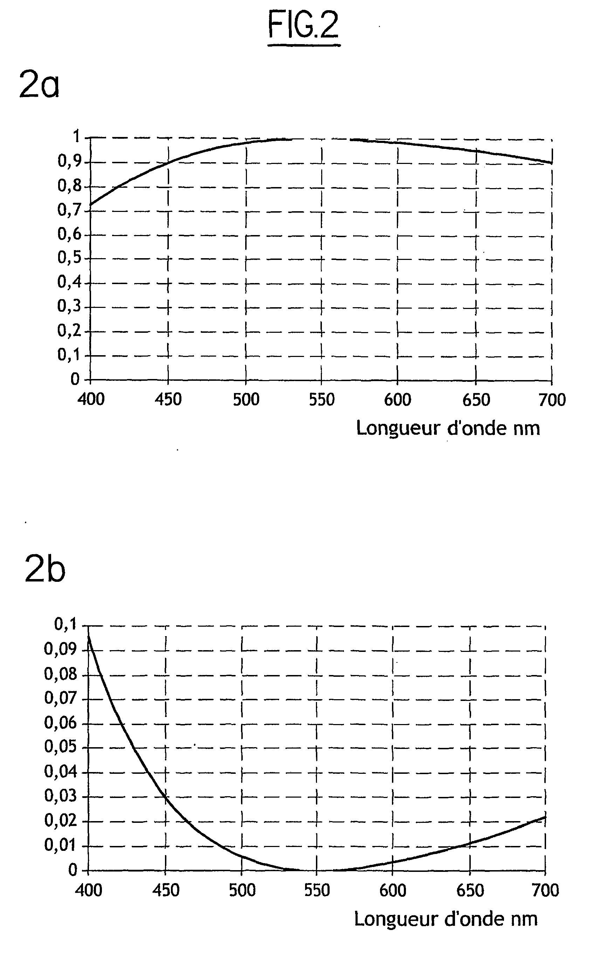

Les auteurs des documents [4] et [6] cherchent, pour une longueur d'onde donnée, les conditions qui annulent la transmission, puis pour la torsion augmentée de $\pi$ les conditions qui permettent d'obtenir la valeur maximale de 1. Le retard $\Delta nd$ pris pour les deux calculs doit bien entendu être le même. Les transmissions respectives des états blanc et noir ainsi obtenues sont données sur la figure 2 annexée en fonction de la longueur d'onde.

Figurent également dans le tableau 1 annexée la valeur des luminances normalisées de l'état noir et de l'état blanc calculées sur l'ensemble du spectre visible, ainsi que le contraste CR, rapport des deux luminances. Ces valeurs permettront de comparer les configurations proposées selon l'état de la technique et celles proposées dans le cadre de la présente invention.

Les luminances normalisées sont calculées comme suit :

$$L = \frac{\int T(\lambda)\overline{y}(\lambda)s(\lambda)d\lambda}{\int \overline{y}(\lambda)s(\lambda)d\lambda}$$

avec $T(\lambda)$ transmission optique de la cellule cristal liquide, $\overline{y}(\lambda)$ sensibilité de l'oeil et $s(\lambda)$ spectre de la source d'illumination, que nous supposons constant et égal à 1 (spectre dit « plat »).

Ce calcul de mode est effectué en partant du principe que

- l'on cherche les points qui vérifient simultanément le noir parfait et le blanc parfait pour les 2 textures différant de $\pi$, à une longueur d'onde fixée, et
- tous les paramètres de la cellule sont libres.

Le document intitulé « Ultra low power bright reflective displays using BiNem® technology fabricated by standard manufacturing equipment » (SID International Symposium Digest Technical Papers, Boston, 21 au 23 mai 2002) décrit un dispositif d'affichage à cristal liquide comprenant deux polariseurs sensiblement parallèles avec un pouvoir rotatoire compris entre 10° et 20°.

## DESCRIPTION DE L'INVENTION

Les inventeurs proposent une démarche différente qui permet d'obtenir pour une cellule $[\phi_U;\phi_T]$ un mode optique possédant un très bon noir, et qui tient compte de certaines contraintes industrielles.

Les inventeurs proposent plus précisément d'appliquer cette démarche à une cellule réelle, c'est à dire en tenant compte d'un ancrage azimuthal dit « fini » (c'est à dire non infiniment fort) par exemple sur une des couches d'alignement. Dans ce cas, les deux textures diffèrent d'un angle légèrement inférieur à $\pi$.

La présente invention propose ainsi un dispositif d'affichage à cristal liquide nématique présentant deux états stables, sans champ électrique, obtenus par cassure d'ancrage, caractérisé par le fait qu'il comprend deux polariseurs, l'un placé côté observateur, l'autre sur la face opposée de la cellule à cristal liquide, l'orientation des deux polariseurs étant décalée d'une valeur égale au pouvoir rotatoire de la cellule +/- $\pi$ /2, le pouvoir rotatoire correspondant à l'effet de la texture la plus tordue.

Selon d'autres caractéristiques avantageuses de la présente invention :

- ■ le retard optique $\Delta nd$ est de l'ordre de 240 +/- 80 nm,
- ■ le retard optique $\Delta nd$ est de l'ordre de 210 $\pm$ 50 nm,
- ■ l'orientation du polariseur placé à l'opposé de l'observateur, par rapport au directeur nématique sur la face associée de la cellule, est comprise dans la gamme comprenant la plage +/-(20° à 70°) tandis que l'orientation du polariseur placé du côté de l'observateur, par rapport à la même référence de directeur nématique, est comprise dans la gamme comprenant la plage de +/-(20° à 70°),
- ■ pour un cristal liquide levogyre, l'orientation du polariseur placé à l'opposé de l'observateur est comprise dans la gamme comprenant les plages -70° à -40° et 20° à 55° tandis que l'orientation du polariseur placé côté observateur est comprise

dans la gamme comprenant les plages - 55° à -20° et 35° à 70°, et pour un cristal liquide dextrogyre, l'orientation du polariseur placé à l'opposé de l'observateur est comprise dans la gamme comprenant les plages - 55° à - 20° et 40° à 70° tandis que l'orientation du polariseur placé côté observateur est comprise dans la gamme comprenant les plages - 70° à -35° et 20° à 55°,

■ l'angle de torsion des molécules dans l'un des deux états stables est compris entre 0° et 15°,

■ l'angle de torsipn des molécules dans l'un des deux états stables est compris entre 0° et 15°, le retard optique $\Delta$nd = 200 +/- 40 nm et pour un cristal liquide levogyre, l'orientation du polariseur opposé à l'observateur est comprise dans la gamme [-60° ;-40°] U [30° ; 50°], tandis que l'orientation du polariseur côté observateur est comprise dans la gamme [-50° ;-25°] U [40° ; 70°],

■ l'angle de torsion des molécules dans l'un des deux états stables est compris entre 0° et 15°, le retard optique $\Delta$nd = 200 +/- 40 nm et pour un cristal liquide dextrogyre, l'orientation du polariseur opposé à l'observateur est comprise dans la gamme [-50° ;-30°] U [40°; 60°], tandis que l'orientation du polariseur côté observateur est comprise dans la gamme [-70° ;-40°] U [25° ; 50°],

■ l'angle de torsion des molécules dans l'un des deux états stables est compris entre 0° et 15°, le retard optique $\Delta$nd = 280 +/- 40 nm et pour un cristal liquide levogyre, l'orientation du polariseur opposé à l'observateur est comprise dans la gamme [-65° ;-45°] U [25°; 50°], tandis que l'orientation du polariseur côté observateur est comprise dans la gamme [-50° ;-20°] U [40° ;70°],

■ l'angle de torsion des molécules dans l'un des deux états stables est compris entre 0° et 15°, le retard optique $\Delta$nd = 280 +/- 40 nm et pour un cristal liquide dextrogyre, l'orientation du polariseur opposé à l'observateur est comprise dans la gamme [-50° ;-25°] U [45°; 65°], tandis que l'orientation du polariseur côté observateur est comprise dans la gamme [-70° ;-40°] U [20° ; 50°],

■ l'angle que font les directions de brossage entre elles est compris entre 10 et 15°, le retard optique $\Delta$nd = 200 +/- 40 nm et pour un cristal liquide levogyre l'orientation du polariseur opposé à l'observateur est comprise dans la gamme [-55° ;-35°] U [35° ; 55°] préférentiellement [-40° ;-50°] U [40° ; 50°], tandis que l'orientation du polariseur côté observateur est comprise dans la gamme [-45° ;-25°] U [45° ; 70°] préférentiellement [-45° ; - 25°] U [50°; 65°],

■ l'angle que font les directions de brossage entre elles est compris entre 10 et 15°, le retard optique $\Delta$nd = 200 +/- 40 nm et pour un cristal liquide dextrogyre, l'orientation du polariseur opposé à l'observateur est comprise dans la gamme [-35° ;-55°] U [35° ; 55°] préférentiellement [-40° ;-50°] U [40° ; 50°], tandis que l'orientation du polariseur côté observateur est comprise dans la gamme [-70° ;-45°] U [25° ; 45°] préférentiellement [-65° ; - 50°] U [25° ; 45°]

■ l'angle que font les directions de brossage entre elles est compris entre 0° et 10°, le retard optique $\Delta$nd = 200 +/- 40 nm et pour un cristal liquide levogyre, l'orientation du polariseur opposé à l'observateur est comprise dans la gamme [-65° ;-40°] U [25° ; 50°] préférentiellement [-60° ;-45°] U [30° ; 45°], tandis que l'orientation du polariseur côté observateur est comprise dans la gamme [-55° ;-25°] U [35° ; 65°] préférentiellement [-50° ; - 30°] U [40° ; 60°]

■ l'angle que font les directions de brossage entre elles est compris entre 0° et 10°, le retard optique $\Delta$nd = 200 +/- 40 nm et pour un cristal liquide dextrogyre, l'orientation du polariseur opposé à l'observateur est comprise dans la gamme [-50° ;-25°] U [40° ; 65°] préférentiellement [-45° ;-30°] U [45° ; 60°], tandis que l'orientation du polariseur côté observateur est comprise dans la gamme [-65° ;-35°] U [25° ; 55°] préférentiellement [-60°; - 40°] U [30° ; 50°]

■ l'angle que font les directions de brossage entre elles est compris entre 0° et 5°, le retard optique $\Delta$nd = 280 +/- 40 nm et pour un cristal liquide levogyre, l'orientation du polariseur opposé à l'observateur est comprise dans la gamme [-70° ;-45°] U [20° ; 45°] préférentiellement [-65° ;-50°] U [25° ; 40°], tandis que l'orientation du polariseur côté observateur est comprise dans la gamme [-50° ;-25°] U [40° ; 65°] préférentiellement [-45° ; - 30°] U [45° ; 60°],

■ l'angle que font les directions de brossage entre elles est compris entre 0° et 5°, le retard optique $\Delta$nd = 280 +/- 40 nm et pour un cristal liquide dextrogyre, l'orientation du polariseur opposé à l'observateur est comprise dans la gamme [-45° ;-20°] U [45° ; 70°] préférentiellement [-40° ;-25°] U [50° ; 65°], tandis que l'orientation du polariseur côté observateur est comprise dans la gamme [-65° ;-40°] U [25° ; 50°] préférentiellement [-60° ; -45°] U [30° ; 45°].

La présente invention propose également un procédé d'optimisation de l'orientation de deux polariseurs dans un dispositif d'affichage à cristal liquide nématique présentant deux états stables par cassure d'ancrage, caractérisé par le fait qu'il comprend les étapes consistant à calculer le pouvoir rotatoire de la cellule et à positionner les deux polariseurs, l'un placé côté observateur, l'autre sur la face opposée de la cellule à cristal liquide, selon une orientation décalée d'une valeur égale au pouvoir rotatoire de la cellule +/- $\pi$ /2, le pouvoir rotatoire correspondant à l'effet de la texture la plus tordue.

Selon d'autres caractéristiques avantageuses du procédé de la présente invention :

■ le pouvoir rotatoire PR est calculé sur la base de la relation :

$$PR \cong \phi - arctg\left(\frac{\phi}{X} tgX\right) \qquad\qquad [3]$$

avec

$$X(\phi, \lambda) = \sqrt{\phi^2 + \left(\frac{\pi \Delta nd}{\lambda}\right)^2} \qquad\qquad [2].$$

■ le procédé comprend les étapes consistant à:

- calculer le pouvoir rotatoire PR à l'aide d'une formule exploitant le retard optique $\Delta nd$, la torsion $\phi$ et la longueur d'onde $\lambda$,
- fixer l'orientation A du polariseur de sortie (10) égale à P+PR+/- $\pi/2$, P représentant l'orientation du polariseur (40) côté opposé à l'observateur et PR le pouvoir rotatoire,
- rechercher les valeurs de P qui donnent la plus forte valeur de transmission résultante pour la valeur de torsion de l'ordre de $\phi$ +/- $\pi$ et
- en déduire A.

■ la valeur de la transmission est définie par la relation :

$$Tas(\phi, \lambda) = \cos^2(\alpha + \beta) - \cos^2 X \cos 2\alpha \cos 2\beta \left[\frac{\phi}{X}\tan X - \tan 2\alpha\right]\left[\frac{\phi}{X}\tan X + \tan 2\beta\right]$$

$$[1].$$

■ le pouvoir rotatoire PR est calculé sur la base d'une valeur de torsion optimal $\phi opt$ déterminé sur la base de la relation :

$$\phi_{opt} = \pi \sqrt{1 - \left(\frac{\Delta nd}{\lambda_0}\right)^2} \qquad\qquad [6].$$

■ le pouvoir rotatoire PR est calculé sur la base d'une valeur de torsion imposée par l'ancrage azimuthal.

• le procédé comprend une étape d'adaptation des angles des polariseurs pour améliorer la neutralité colorimétrique du blanc obtenu.

■ le pouvoir rotatoire PR est calculé sur la base d'une valeur de torsion qui intègre un décrochage (DE) résultant d'un ancrage azimuthal fini.

D'autres caractéristiques, buts et avantages de la présente invention apparaîtront à la lecture de la description détaillée qui va suivre et en regard des dessins annexés, donnés à titre d'exemple non limitatif et sur lesquels :

- la figure 1 représente schématiquement une cellule à cristaux liquides applicable à la présente invention et définit les angles utilisés dans la suite de l'exposé,
- la figure 2 représente les transmissions respectives des états blanc (figure 2a) et noir (figure 2b) obtenues à l'aide d'un dispositif conforme à la présente invention, en fonction de la longueur d'onde,
- la figure 3 représente schématiquement les angles $\psi$ et w caractéristiques d'une polarisation elliptique,
- la figure 4 représente le pouvoir rotatoire en fonction du retard optique pour un paramètre $\phi$ libre,

- la figure 5 représente la transmission optique de la configuration (Δnd = 193mm) décrite dans le tableau 2 en fonction de la longueur d'onde, respectivement pour l'état blanc sur la figure 5a et pour l'état noir sur la figure 5b,
- la figure 6 représente schématiquement les directions de brossage côté analyseur et polariseur et les orientations des molécules de cristal liquide sur les couches d'alignement pour le cas d'un ancrage azimuthal infiniment fort,
- la figure 7 représente le pouvoir rotatoire en fonction du retard optique pour un paramètre $\phi$ imposé,
- la figure 8 représente la transmission optique de la configuration (Δnd = 275mm, $\phi$ imposé à $\phi$u = 0° et $\phi$T = -180°) décrite dans le tableau 3 en fonction de $\alpha$,
- la figure 9 représente la transmission optique de la configuration (Δnd = 275mm, $\phi$ imposé à $\phi$u = 0° et $\phi$T = -180°) décrite dans le tableau 3 en fonction de la longueur d'onde, respectivement pour l'état blanc sur la figure 9a et pour l'état noir sur la figure 9b,
- la figure 10 représente la transmission optique de la configuration (Δnd = 193mm, $\phi$ imposé à $\phi$u = 0° et $\phi$T = -180°) décrite dans le tableau 3 en fonction de la longueur d'onde, respectivement pour l'état blanc sur la figure 10a et pour l'état noir sur la figure 10b et
- la figure 11 représente schématiquement une vue similaire à la figure 3 pour le cas d'un ancrage azimuthal fini sur la plaque de la cellule située du côté de l'analyseur.

Les calculs d'optimisation sont effectués par la suite pour le mode transmissif. Cependant la présente invention est directement applicable pour la réalisation d'écrans transflectifs ou réflectifs, la seule différence étant la nature du polariseur arrière 40, toutes choses étant égales par ailleurs.

## DEMARCHE DE CALCUL POUR OPTIMISER LE MODE TRANSMISSIF D'UNE CELLULE [$\phi_U$ ;$\phi_T$]

Tout d'abord ce qui caractérise la performance d'un mode transmissif est la qualité de son noir. L'optimisation de l'état noir  doit donc être faite non pas sur une longueur d'onde unique mais sur l'ensemble du spectre visible. La condition T=1 pour l'état blanc à une longueur d'onde fixée n'est pas nécessaire, l'écran étant éclairé par une source arrière, une perte sur l'état blanc est acceptable, à condition qu'elle ne soit pas trop importante.

La démarche suivie par les inventeurs consiste à calculer le mode optimum donnant le meilleur noir pour plusieurs valeurs de retard Δnd. La valeur de retard finalement choisie dépendra du compromis qualité du noir-qualité blanc souhaité.

La texture T est plus stable optiquement que la texture U, elle est donc choisie par les inventeurs pour obtenir le noir.

### Caractéristiques de la polarisation après la traversée de la couche de cristal liquide

Les inventeurs utilisent le formalisme de Poincaré, qui décrit les différents états de polarisation possibles ainsi que l'évolution de celle-ci lors de sa propagation dans la cellule par un tracé sur une sphère prénommée sphère de Poincaré (voir documents [9] ou [10]).

Cet outil très puissant pour qui sait voir dans l'espace tridimentionnel permet une meilleure compréhension de l'effet optique de la cellule de cristal liquide pour la texture fortement tordue (torsion de l'ordre de $\pi$) , qui est utilisée pour le noir dans le mode transmissif.

Le principal résultat obtenu grâce à cet outil est que la texture T (torsion $\phi_T$ de l'ordre de $\pi$) est, pour des retards de cellules Δnd inférieurs ou égaux à $\lambda/2$ ($\lambda$ représentant une longueur d'onde du spectre visible), équivalente à un pouvoir rotatoire PR presque parfait. Ceci signifie que quel que soit l'angle de la polarisation d'entrée P, la polarisation de sortie Pout est  faiblement elliptique (presque linéaire) et le grand axe de cette ellipse fait un angle PR par rapport à P.

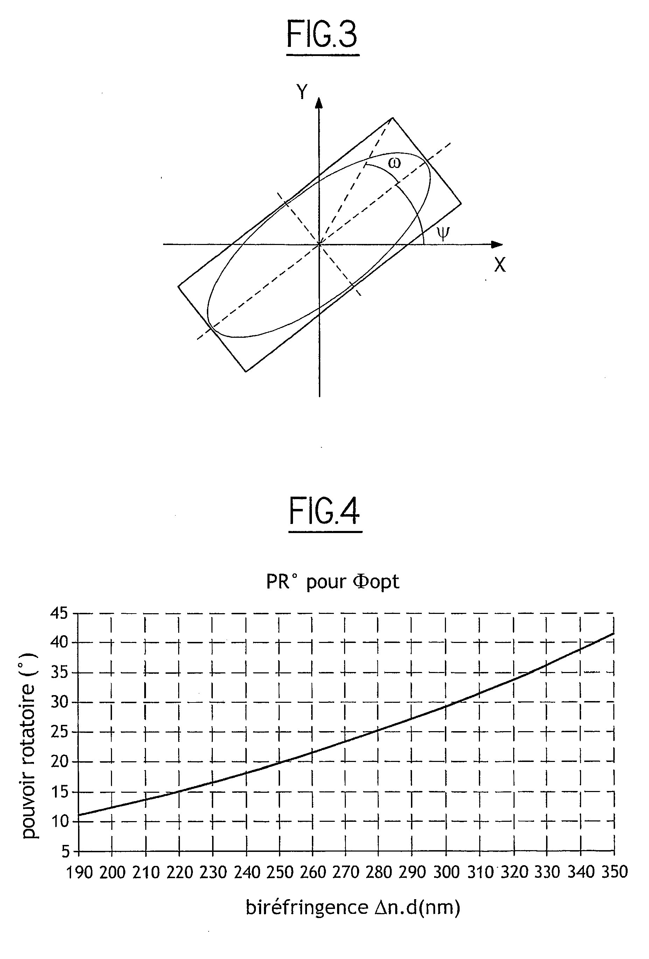

La polarisation de sortie Pout, a priori quelconque donc elliptique, peut être caractérisée par 2 angles $\psi$ et $\omega$. $\psi$ est l'angle que fait le grand axe de l'ellipse avec x' et $\omega$ caractérise l'ellipticité de la polarisation telle qu'illustré figure 3.

On a $\psi = P + PR$

Grâce à la sphère de Poincaré il est également possible d'obtenir la forme analytique de PR (valeur approchée) et de $\omega$.

$$PR \cong \phi - arctg\left(\frac{\phi}{X}tgX\right) \qquad [3]$$

$$\sin 2\omega = 2\sin\eta\sin X\left(\cos 2\alpha\cos\eta\sin X + \sin 2\alpha\cos X\right) \qquad [4]$$

avec

$$\cos\eta = \frac{\phi}{X}$$

La formule [3] est valable en première approximation, lorsque X est proche de $\pi$, ce qui est toujours vrai dans les cas traités dans la présente demance.

L'annulation de l'éllipticité $\omega$ équivaut à l'obtention en sortie de cellule d'une polarisation linéaire, c'est à dire une configuration ou l'on pourra obtenir avec l'analyseur un noir ou un blanc parfait.

Le fait de pouvoir prédire grâce à la formule [3] la valeur du pouvoir rotatoire, permet de calculer l'angle $\psi$ de la polarisation de sortie Pout. La configuration A pour l'analyseur 10 donnant le meilleur noir pour une orientation P du polariseur 40 donnée est A perpendiculaire à $\psi$.

Soit

$$A = P+PR \pm \pi/2 \tag{5}$$

La condition qui annule l'éllipticité $\omega$ est $X = \pi$. Soit :

$$\phi_{opt} = \pi\sqrt{1 - \left(\frac{\Delta nd}{\lambda_0}\right)^2} \tag{6}$$

Ainsi lorsque $\lambda$ est fixé, il existe une relation entre $\phi$ et $\Delta nd$ permettant d'obtenir une polarisation de sortie Pout linéaire, ce qui garantit l'obtention d'un noir parfait à un $\lambda$ donné, avec l'analyseur 10 perpendiculaire à la polarisation de sortie. Nous appellerons $\phi_{opt}$ la valeur de $\phi$ calculée avec la formule [6] pour un retard $\Delta nd$ donné.

La configuration optimale est calculée pour un retard de cellule $\Delta nd$ et une longueur d'onde $\lambda$ donnée.

Le mode opératoire pour calculer la meilleure configuration dans le cadre de la présente invention est de préférence le suivant :

**Cas où le paramètre $\phi$ est libre**

La formule [6] permet de calculer la valeur de $\phi$ optimale $\phi_{opt}$ pour le retard choisi.

Optimisation du noir

A partir des valeurs fixées de $\Delta nd$ et $\lambda_o$ ($\lambda_o$ étant une longueur d'onde choisie dans le spectre visible, par exemple 550 nm), on détermine $\phi_T = \phi_{opt}$ à partir de la formule [6], puis on calcule avec la formule [3] la valeur exacte du pouvoir rotatoire PR. La valeur du pouvoir rotatoire PR en fonction du retard de la cellule est donné figure 4. On constate que pour un retard entre 190 nm et 320 nm, PR varie entre 10° et 35°.

Pour obtenir un noir il faut une orientation A de l'analyser 10 perpendiculaire à la polarisation de sortie Pout (formule [5]): Soit A = P+PR$\pm\pi/2$

Recherche du meilleur blanc

A (ou $\beta$) est remplacé par sa valeur en fonction de P (ou $\alpha$) dans la formule de la transmission telle que la formule [1], avec $\phi_U = \phi_T + \pi$. La seule variable restante est P (ou $\alpha$). On recherche la valeur de P (ou $\alpha$) qui donne la valeur la plus élevée de T. Une fois P déterminée, la valeur de A est obtenue à l'aide de la formule [5].

**Exemple de calcul - Amélioration de l'état noir**

Partant de ces considérations, il apparaît qu'une diminution du retard $\Delta nd$ de la cellule par rapport à la valeur préconisée par l'état de la technique permet d'améliorer très nettement la qualité du noir, le prix à payer étant une perte sur l'état passant (blanc).

Le tableau 2 annexé donne plusieurs ensembles théoriques de paramètres de la cellule optimisés pour obtenir le meilleur noir sur le spectre visible calculés selon la démarche décrite précédemment.

Pour le cas $\Delta nd$= 193 nm, on voit que le contraste a été multiplié par 3 par rapport à la solution traditionnelle du tableau 1 (état de la technique), au prix d'une perte de 20% sur l'état blanc.

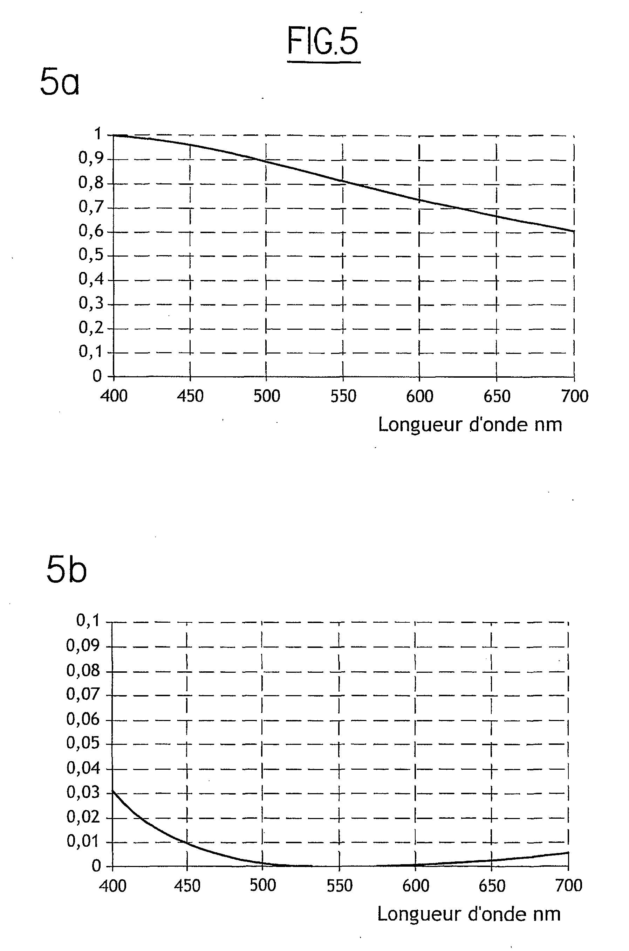

Les transmissions respectives des états blanc et noir obtenues pour le cas $\Delta nd$= 193 nm décrit dans le tableau 2 sont données figure 5 en fonction de la longueur d'onde. Le spectre du noir est très amélioré dans le bleu, au prix d'un état blanc moins « plat » qui sera légèrement bleuté.

Cependant les valeurs données sur le tableau 2 correspondent à des valeurs théoriques. En pratique les processus de fabrication industrielle de cellules à cristaux liquides imposent des contraintes sur les ancrages et torsion réels dont il convient de tenir compte.

**Prise en compte de la contrainte $\phi$ imposé**

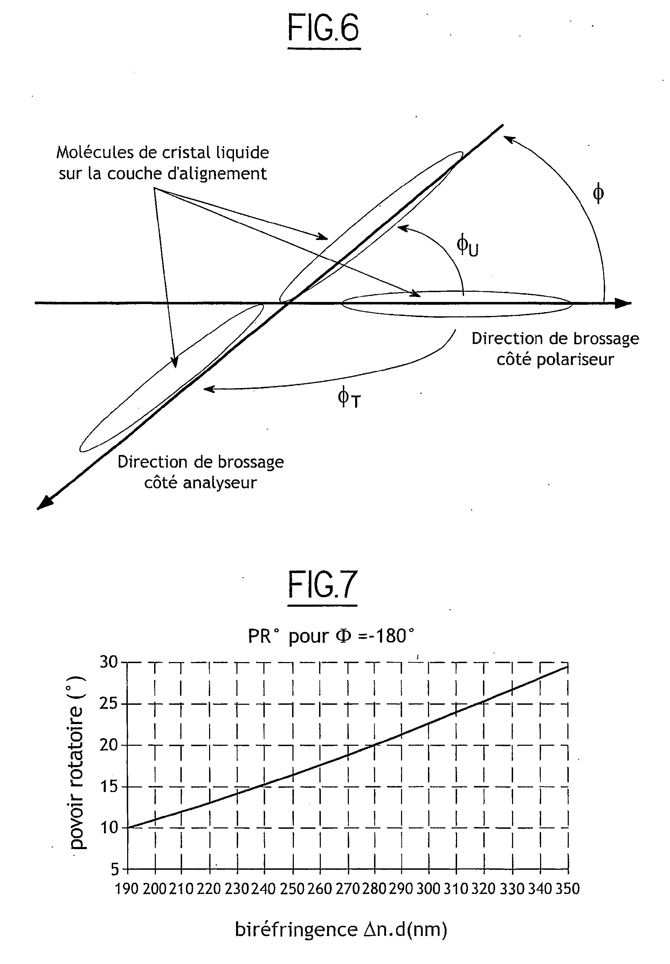

Dans le cas pratique d'un ancrage azimutal infiniment fort le directeur 22, 32 sur chaque face 20, 30 de la cellule est déterminé par la direction de brossage de la couche d'alignement (par exemple de type chimique polyimide) utilisée sur cette face. En effet pour un ancrage azimutal infiniment fort, le directeur du cristal liquide s'aligne parallèlement à la direction de brossage (voir figure 6). Dans ce cas, une valeur précise de $\phi$ est obtenue en fixant les directions de brossage des deux couches d'alignement sur la machine de production de l'afficheur, pour qu'elles fassent entre elles un angle $\phi$.

Pour des questions de commodité de montage ou de bon fonctionnement de la cellule, les angles des directions de brossage de la cellule peuvent être imposées, ce qui impose donc $\phi_U$ et $\phi_T$. Dans ce cas, le calcul de la meilleure configuration pour P et A selon le critère : « meilleur noir sans trop de pertes sur le blanc », n'est pas aisé avec une formule analytique telle que [1]. La démarche proposée par les inventeurs permet d'effectuer plus facilement ce calcul.

Le pouvoir rotatoire est calculé pour la valeur de $\phi_T$ imposée, puis comme précédemment la valeur de A en fonction de P découlant de la formule [5] est injectée dans la formule [1] pour $\phi_U$ imposé, et l'on recherche les valeurs de P qui maximisent la transmission.

**Exemples de calcul avec $\phi$ imposé**

On prend par exemple $\phi_T$ = -$\pi$ soit $\phi_U$ = 0° (directions de brossage antiparallèles) et $\lambda$=550 nm.

Dans ce cas, $\alpha$=P et $\beta$=A

La valeur calculée du pouvoir rotatoire en fonction du retard de la cellule est donné figure 7. En comparaison avec la figure 4 où $\phi$ est optimal, on voit que PR dépend essentiellement en première approximation du retard, et également de la valeur de $\phi$.

Exemple 1 : $\Delta nd$ = 275 nm

On calcule PR = 19,2° et $\beta$ = $\alpha$ +PR $\pm$ $\pi/2$

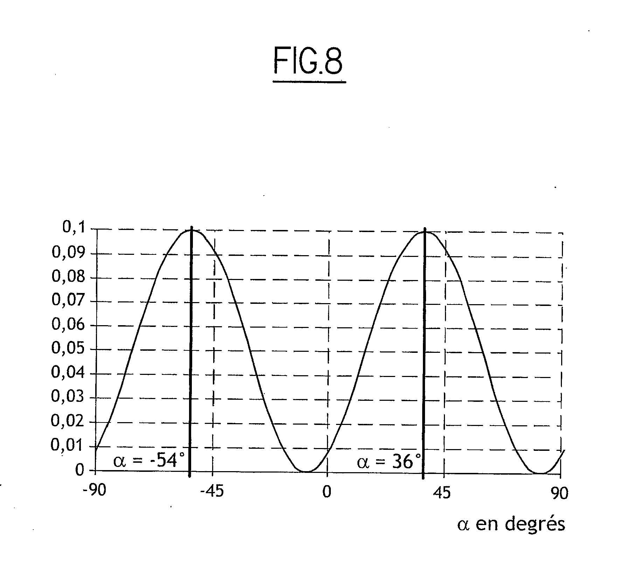

La transmission T calculée pour $\phi_U$=0° est donnée figure 8.

Les valeurs de $\alpha$ qui donnent la valeur maximale de T sont (voir figure 8):

$$\alpha = -54° \quad \text{d'où} \quad \beta = 55°$$
$$\alpha = 36° \quad \text{d'où} \quad \beta = -35°$$

Ces deux configurations sont équivalentes.

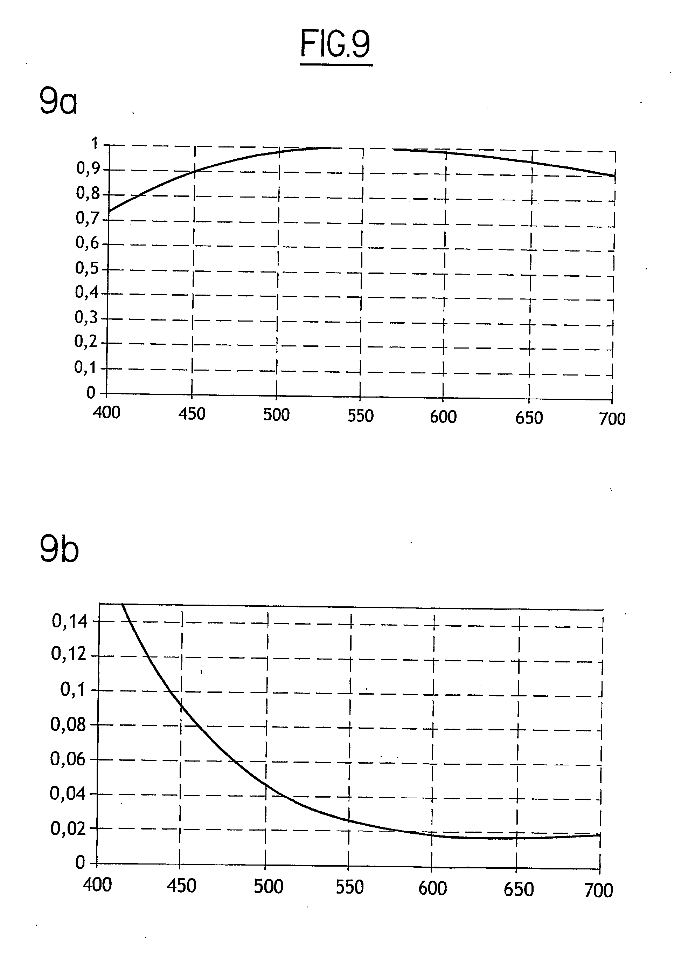

Les transmissions optiques des états blanc et noir sont données figure 9. Les performances de cette configuration sont données dans le tableau 3.

Exemple 2 : $\Delta nd$ = 193 nm

De la même façon que pour l'exemple 1, on calcule :

$$PR = 10,17°$$
$$\alpha = -50° \quad \text{d'où} \quad \beta = 55°$$
$$\alpha = 40° \quad \text{d'où} \quad \beta = -40°$$

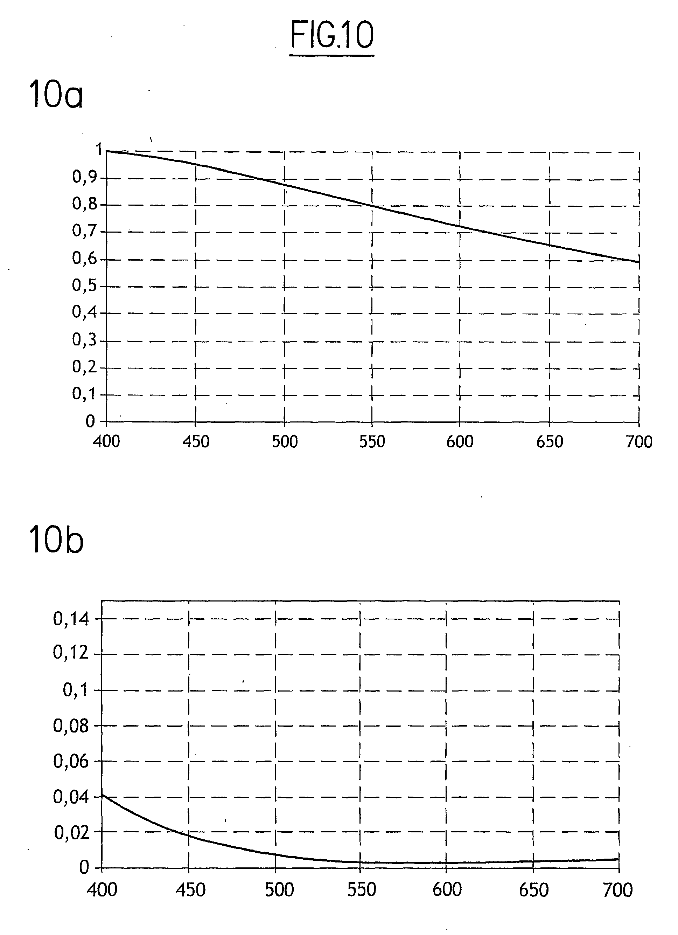

Les transmissions optiques des états blanc et noir sont données figure 10. Les performances de cette configuration sont données dans le tableau 3.

On retrouve pour ces deux cas de retard à $\phi$ imposé les mêmes tendances que pour $\phi$ libre : un meilleur noir pour 193 nm au prix d'un blanc moins lumineux et moins « plat ».

## CAS REEL D'UN ANCRAGE AZIMUTHAL FINI

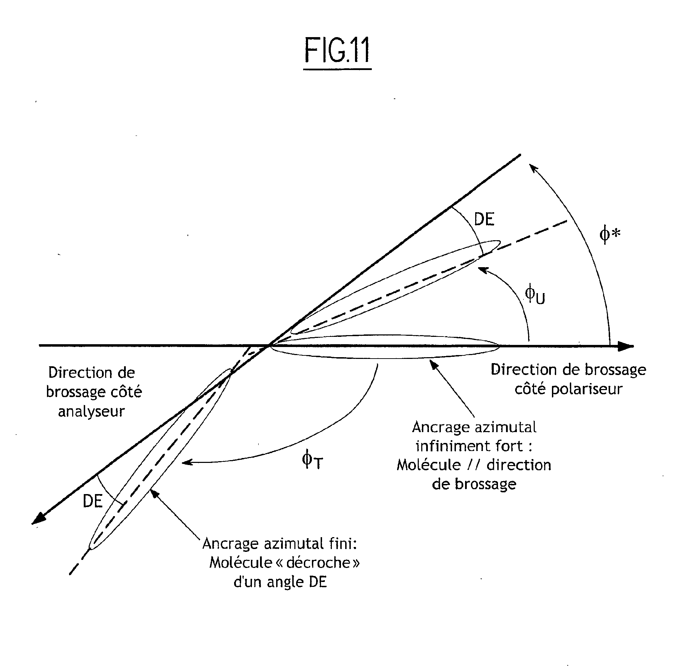

Lorsque l'ancrage azimutal est fini (non infiniment fort), les forces élastiques qui s'exercent sur les molécules proches de la surface du fait du dopage chiral du mélange cristal liquide, vont faire « décrocher » ces molécules, c'est à dire que le directeur du cristal liquide n'est plus strictement parallèle à la direction de brossage, mais décalé d'un angle DE appelé « décrochage élastique ». Pour simplifier l'illustration, on suppose qu'une seule couche d'ancrage possède un ancrage azimutal fini, l'autre couche possédant un ancrage azimutal infiniment fort. Le décrochage va dans le sens de diminuer la valeur absolue de la torsion de faible valeur $\phi_U$, qui devient par exemple $\phi_U$ - DE pour $\phi_U$ >0, et de diminuer la valeur absolue de la torsion de forte valeur $\phi_T$, qui devient par exemple $\phi_T$ + DE pour $\phi_T$<0 (voir figure 11).

Nous appelons $\phi^*$ l'angle que font les directions de brossage entre elles.

Du fait du décrochage on a :

$$\phi_T - \phi_U = -\pi + 2.DE$$

Le décrochage élastique est directement relié à la force d'ancrage azimutale caractérisée par.sa longueur d' extrapolation Laz selon la relation :

$$DE = \frac{\pi.L_{az}}{2d}$$

Un ancrage azimutal fini possède typiquement Laz de l'ordre de 100 à 200 nm, soit DE compris entre quelques degrés et 15° environ. Le paramètre DE est un paramètre physique mesurable expérimentalement, donc supposé connu.

Les inventeurs ont choisi pour les exemples suivants des valeurs de DE de 5° et 10°.

### Cas où le paramètre $\phi^*$ est libre

Nous allons calculer les valeurs optimales de $\phi^*$ en fonction du décrochage DE, ainsi que la configuration optique correspondante.

Pour chaque retard $\Delta nd$ on appelle $\phi_{opt}$ la valeur optimale de la forte torsion telle que définie par la formule [6].

La valeur effective de la forte torsion $\phi_T$ vaut (voir figure 11) :

$$\phi_T = -\pi + \phi^* + DE$$

On veut $\phi_T = \phi_{opt}$ d'où

$$\phi^* = \pi + \phi_{opt} - DE$$

Le pouvoir rotatoire est calculé pour ($\Delta nd$, $\phi_{opt}$), puis la relation entre A et P est injectée dans la formule [1] pour $\phi_U = \phi^*$ - DE, et l'on recherche graphiquement les valeurs de P qui maximisent la transmission.

Exemple de calcul avec $\Delta nd$ = 193 nm

La valeur de $\phi_{opt}$ est dans ce cas -168,5°, correspondant à un pouvoir rotatoire de 11,5°.

Les calculs et les performances de la configuration optimisée correspondant à chaque valeur de décrochage sont donnés sur le tableau 4.

On retrouve des performances proches de celles du tableau 2, ce qui est logique car dans les deux cas il est possible de configurer la cellule telle que $\phi_T$ soit égal à $\phi$ optimum, ce qui garantit un bon noir.

Exemple de calcul avec $\Delta$nd = 275 nm

La valeur de $\phi_{opt}$ est dans ce cas -156° , correspondant à un pouvoir rotatoire de 24° .

Les calculs et les performances de la configuration optimisée correspondant à chaque valeur de décrochage sont donnés sur le tableau 5.

Du fait du retard plus élevé, le contraste est moins bon, mais il garde une valeur correcte (> 200) car on peut configurer la cellule pour que $\phi_T$ soit égal à $\phi$ optimum.

**Cas où le paramètre $\phi$\* est imposé**

La direction de brossage des cellules $\phi$\* peut être imposée par exemple par le procédé industriel.

La valeur effective de $\phi_T$ vaut dans ce cas (cf figure 11) :

$$\phi_T = -\pi + \phi* + DE$$

Le pouvoir rotatoire est calculé pour la valeur de $\phi_T$ correspondante, puis comme précédemment la valeur de A en fonction de P découlant de la formule [5] est injectée dans la formule [1] pour $\phi_U = \phi*- DE$, et l'on recherche les valeurs de P qui maximisent la transmission. Les résultats pour les valeurs de retard 193 nm et 275 nm sont donnés dans les tableaux 6 et 7 pour le cas $\phi$\* imposé égal à 0°.

L'effet du décrochage élastique diminue la valeur de la torsion de forte valeur $\phi_T$, ce qui rapproche $\phi_T$ de la valeur $\phi_{opt}$ (-168,5° pour le cas 193 nm et -156° pour 275 nm). Le contraste s'améliore donc lorsque le décrochage augmente. Pour 193 nm et DE=10°, on est presque à $\phi_{opt}$, la valeur de contraste obtenue, 896, est donc très proche de la valeur obtenue avec $\phi_{opt}$ (916).

**VARIANTES DE L'INVENTION**

Les configurations calculées pour le mode transmissif sont applicables aux modes transflectif ou réflectif. Les angles calculés sont identiques, seule la nature du polariseur 40 côté source P diffère selon le mode.

Ces modes privilégient le noir, et donc possèdent un blanc non optimisé en terme de brillance.

Pour modifier légèrement la colorimétrie du blanc, les positions des polariseurs 40 et 10 peuvent être ajustées au voisinage de leur position calculée, à condition de respecter la relation qui les lie entre eux (donnée par le pouvoir rotatoire) qui garantit le meilleur noir.

Le pouvoir rotatoire PR est fonction de la torsion $\phi$ (proche de $\pi$) et du retard de la cellule. Les angles entre P et A qui dépendent de la valeur de PR sont donc en grande partie dépendants de la valeur du retard de la cellule.

Table 1 : mode optique transmissif d'une cellule [$\phi$;$\phi$-$\pi$] selon l'état de la technique (document [4] US 2003/0076455)

| $\phi_U$ | $\phi_T$=$\phi_U$-$\pi$ | $\Delta$nd | P | A | Lnoir $\phi_T$=$\phi_U$-$\pi$ | Lblanc $\phi_U$ | CR |
|---|---|---|---|---|---|---|---|
| 22,5° | -157,5° | 266 nm | -45° 45° | +67,5° -22,5° | 0.0031 | 0.988 | 317 |

Table 2 : exemple de solutions permettant une amélioration de l'état noir

| $\Delta$nd | $\phi_U$ | $\phi_T$=$\phi_U$-$\pi$ opt | P | A | Lnoir $\phi_T$=$\phi_U$-$\pi$ | Lblanc $\phi_U$ | CR |
|---|---|---|---|---|---|---|---|
| 220 nm | 15° | -165° | -45° 45° | 60° -30° | 0.0015 | 0.90 | 623 |
| 193 nm | 11,5° | -168,5° | -45° 45° | 56,5° -33,5° | 0.00087 | 0.8 | 916 |

Table 3 : exemples de solutions optimisant l'état noir avec une torsion imposée à -π

| Δnd | $\phi_U$ | $\phi_T=\phi_U-\pi$ imposé | P | A | Lnoir $\phi_T=\phi_U-\pi$ | Lblanc $\phi_U$ | CR |
|---|---|---|---|---|---|---|---|
| 275 nm | 0° | -180° | -54° | 55° | 0.028 | 0.987 | 35 |
| | | | 36° | -35° | | | |
| 193 nm | 0° | -180° | -50° | 50° | 0.0044 | 0.787 | 178 |
| | | | 40° | -40° | | | |

Tableau 4 : exemple de solutions pour différentes valeurs de décrochage élastique pour (Δnd = 193nm ; $\phi_{opt}$=-168,5°; λ=550 nm)

| DE | $\phi^*$ | $\phi_U$ | P | A | Lnoir $\phi_T$ | Lblanc $\phi_U$ | CR |
|---|---|---|---|---|---|---|---|
| 5° | 6,5° | 1,5° | -50° | 52,5° | 0,00087 | 0,80 | 918 |
| | | | 40° | -38,5° | | | |
| 10° | 1,5° | -3,5° | -52° | 49,5° | 0,00086 | 0,79 | 919 |
| | | | 38° | -40,5° | | | |

Tableau 5 : exemple de solutions pour différentes valeurs de décrochage élastique pour (Δnd = 275nm ; $\phi_{opt}$=-156°; λ=550 nm)

| DE | $\phi^*$ | $\phi_U$ | P | A | Lnoir $\phi_T$ | Lblanc $\phi_U$ | CR |
|---|---|---|---|---|---|---|---|
| 5° | 19° | 14° | -51° | 63° | 0,0035 | 0,984 | 282 |
| | | | 40° | -25° | | | |
| 10° | 14° | 9° | -52° | 62° | 0,0034 | 0,986 | 285 |
| | | | 38° | -28° | | | |

Tableau 6 : exemple de solutions pour différentes valeurs de décrochage élastique pour (Δnd = 193nm ; λ=550 nm) avec $\phi^*$ imposé à 0°.

| DE | $\phi^*$ | $\phi_U$ | P | A | Loir $\phi_T$ | Lblanc $\phi_U$ | CR |
|---|---|---|---|---|---|---|---|
| 5° | 0° | -5° | -52° | 48,5 | 0,0020 | 0,789 | 399 |
| | | | 38° | -41,5° | | | |
| 10° | 0° | -10° | -55,5° | 45,5° | 0,0009 | 0,781 | 896 |
| | | | 34,5° | -44,5° | | | |

Tableau 7 : exemple de solutions pour différentes valeurs de décrochage élastique pour (Δnd = 275nm ; λ=550 nm) avec $\phi^*$ imposé à 0°.

| DE | $\phi^*$ | $\phi_U$ | P | A | Lnoir $\phi_T$ | Lblanc $\phi_U$ | CR |
|---|---|---|---|---|---|---|---|
| 5° | 0° | -5° | -56,5° | 53,5° | 0,019 | 0,99 | 51 |
| | | | 33,5° | -36,5° | | | |
| 10° | 0° | -10° | -60,5° | 50,5° | 0,011 | 0,99 | 87 |
| | | | 29,5° | -39,5° | | | |

Les valeurs données dans les tableaux ci-dessus correspondent à une texture levogyre.

L'invention est bien entendu valable lorsque le cristal liquide est dextrogyre. Une telle texture dextrogyre inverse les signes respectifs de $\phi_U$ et $\phi_T$. et du pouvoir rotatoire PR.

Dans ce cas, les configurations équivalentes s'obtiennent en inversant les signes de $\phi_U$ et $\phi_T$ et de PR. Les orientations optimales des polariseur 40 et analyseur 10 sont obtenues en inversant les signes des P et des A . A titre d'exemple, on donne ci-dessous, respectivement dans les tableaux 8 9 et 10, les valeurs dextrogyres correspondants au tableaux 5 6 et 7 ci-dessus du cas levogyre:

Tableau 8 : exemple de solutions pour différentes valeurs de décrochage élastique pour ($\Delta$nd = 275nm ; $\phi_{opt}$=156°; $\lambda$=550 nm) - cas d'un cristal liquide dextrogyre

| DE | $\phi^*$ | $\phi_U$ | P | A | Lnoir $\phi_T$ | Lblanc $\phi_U$ | CR |
|---|---|---|---|---|---|---|---|
| 5° | -19° | -14° | 51° -40° | -63° 26° | 0,0035 | 0,984 | 282 |
| 10° | -14° | -9° | 52° -38° | -62° 28° | 0,0034 | 0,986 | 285 |

Tableau 9 : exemple de solutions pour différentes valeurs de décrochage élastique pour ($\Delta$nd = 193nm ; $\lambda$=550 nm) avec $\phi^*$ imposé à 0°- cas d'un cristal liquide dextrogyre.

| DE | $\phi^*$ | $\phi_U$ | P | A | Lnoir $\phi_T$ | Lblanc $\phi_U$ | CR |
|---|---|---|---|---|---|---|---|
| 5° | 0° | 5° | 52° -38° | -48,5 41,5° | 0,0020 | 0,789 | 399 |
| 10° | 0° | 10° | 55,5° -34,5° | -45,5° 44,5° | 0,0009 | 0,781 | 896 |

Tableau 10 : exemple de solutions pour différentes valeurs de décrochage élastique pour ($\Delta$nd = 275nm ; $\lambda$=550 nm) avec $\phi^*$ imposé à 0°- cas d'un cristal liquide dextrogyre

| DE | $\phi^*$ | $\phi_U$ | P | A | Lnoir $\phi_T$ | Lblanc $\phi_U$ | CR |
|---|---|---|---|---|---|---|---|
| 5° | 0° | 5° | 56,5° -33,5° | -53,5° 36,5° | 0,019 | 0,99 | 51 |
| 10° | 0° | 10° | 60,5° -29,5° | -50,5° 39,5° | 0,011 | 0,99 | 87 |

**REFERENCES**

Doc [1]: brevet FR-A-2 740 894
Doc [2]: "Fast bistable nematic display using monostable surface anchoring witching" Proceeding SID 1997, p41-44
Doc [3]: "recents improvements of bistable nematic displays switched by anchoring breaking" SPIE vol.3015 (1997), p61-69 Doc [4] : brevet US 2003/0076455
Doc [5]: "Dynamic flow, broken surface anchoring, and switching bistability in three-terminal twisted nematic liquid crystal displays" Journal of Applied Physics, vol 90, n° 6, p 3121-3123 (2001)
Doc [6]: "Three terminal bistable twisted nematic liquid crystal displays", Applied Physics letters",vol77,n°23, p 3716-3718, December 2000
Doc [7]: H.L. Ong "Origin and characteristics of the optical properties of general twisted nematic liquid crystal displays", J. Appl. Phys. 64, 614 (1988)
Doc [8]:P. Yeh and C. Gu "Optics of liquid crystal displays", Wiley, New York, 1999
Doc [9]: Poincare H., théorie mathématique de la lumière, Gauthiers Villars (1889)
Doc [10]: Schurcliff W.A. « Polarized light, production and use" Harvard University Press (1966)

**Revendications**

**1.** Dispositif d'affichage à cristal liquide nématique présentant deux états stables, sans champ électrique, obtenus par cassure d'ancrage, les deux états stables correspondant à deux textures de molécules de cristal liquide dont la torsion diffère de 150° à 180° en valeur absolue, **caractérisé par le fait qu'**il comprend deux polariseurs (10, 40), l'un (10) placé côté observateur, l'autre (40) sur la face opposée de la cellule à cristal liquide, l'orientation des deux polariseurs étant décalée d'une valeur égale au pouvoir rotatoire de la cellule +/- π/2, le pouvoir rotatoire correspondant à l'effet de la texture la plus tordue.

2. Dispositif selon la revendication 1, **caractérisé par le fait que** le retard optique Δnd est de l'ordre de 240 +/- 80 nm.

3. Dispositif selon l'une des revendications 1 ou 2, **caractérisé par le fait que** l'orientation du polariseur placé à l'opposé de l'observateur, par rapport au directeur nématique sur la face associée de la cellule, est comprise dans la gamme comprenant la plage +/-(20° à 70°) tandis que l'orientation du polariseur placé du côté de l'observateur, par rapport à la même référence de directeur nématique, est comprise dans la gamme comprenant la plage de +/- (20° à 70°).

4. Dispositif selon l'une des revendications 1 à 3, **caractérisé par le fait que** pour un cristal liquide levogyre, l'orientation du polariseur placé à l'opposé de l'observateur est comprise dans la gamme comprenant les plages -70° à -40° et 20° à 55° tandis que l'orientation du polariseur placé côté observateur est comprise dans la gamme comprenant les plages - 55° à -20° et 35° à 70°, et pour un cristal liquide dextrogyre, l'orientation du polariseur placé à l'opposé de l'observateur est comprise dans la gamme comprenant les plages - 55° à - 20° et 40° à 70° tandis que l'orientation du polariseur placé côté observateur est comprise dans la gamme comprenant les plages - 70° à -35° et 20° à 55°.

5. Dispositif selon l'une des revendications 1 à 4, **caractérisé par le fait que** l'angle de torsion des molécules dans l'un des deux états stables est compris entre 0° et 15°.

6. Dispositif selon l'une des revendications 1 à 5, **caractérisé par le fait que** l'angle de torsion des molécules dans l'un des deux états stables est compris entre 0° et 15°, le retard optique Δnd = 200 +/- 40 nm et pour un cristal liquide levogyre, l'orientation du polariseur opposé à l'observateur est comprise dans la gamme [-60° ;-40°] U [30° ; 50°], tandis que l'orientation du polariseur côté observateur est comprise dans la gamme [-50° ;-25°] U [40° ; 70°].

7. Dispositif selon l'une des revendications 1 à 5, **caractérisé par le fait que** l'angle de torsion des molécules dans l'un des deux états stables est compris entre 0° et 15°, le retard optique Δnd = 200 +/- 40 nm et pour un cristal liquide dextrogyre, l'orientation du polariseur opposé à l'observateur est comprise dans la gamme [-50° ;-30°] U [40° ; 60°], tandis que l'orientation du polariseur côté observateur est comprise dans la gamme [-70° ;-40°] U [25° ; 50°]

8. Dispositif selon l'une des revendications 6 ou 7 prise dans leur dépendance des revendications 1 ou 3 à 5, **caractérisé par le fait que** le retard optique Δnd est de l'ordre de 210 ± 50 nm.

9. Dispositif selon l'une des revendications 1 à 5, **caractérisé par le fait que** l'angle de torsion des molécules dans l'un des deux états stables est compris entre 0° et 15°, le retard optique Δnd = 280 +/- 40 nm et pour un cristal liquide levogyre, l'orientation du polariseur opposé à l'observateur est comprise dans la gamme [-65° ;-45°] U [25° ; 50°], tandis que l'orientation du polariseur côté observateur est comprise dans la gamme [-50° ;-20°] U [40° ;70°].

10. Dispositif selon l'une des revendications 1 à 5, **caractérisé par le fait que** l'angle de torsion des molécules dans l'un des deux états stables est compris entre 0° et 15°, le retard optique Δnd = 280 +/- 40 nm et pour un cristal liquide dextrogyre, l'orientation du polariseur opposé à l'observateur est comprise dans la gamme [-50° ;-25°] U [45° ; 65°], tandis que l'orientation du polariseur côté observateur est comprise dans la gamme [-70 ;-40°] U [20° ; 50°].

11. Dispositif selon l'une des revendications 1 à 5, **caractérisé par le fait que** l'angle que font les directions de brossage entre elles est compris entre 10 et 15°, le retard optique Δnd = 200 +/- 40 nm et pour un cristal liquide levogyre l'orientation du polariseur opposé à l'observateur est comprise dans la gamme [-55° ;-35°] U [35° ; 55°] préférentiellement [-40° ;-50°] U [40° ; 50°], tandis que l'orientation du polariseur côté observateur est comprise dans la gamme [-45° ;-25°] U [45° ; 70°] préférentiellement [-45° ; -25°] U [50° ; 65°].

12. Dispositif selon l'une des revendications 1 à 5, **caractérisé par le fait que** l'angle que font les directions de brossage entre elles est compris entre 10 et 15°, le retard optique Δnd = 200 +/- 40 nm et pour un cristal liquide dextrogyre, l'orientation du polariseur opposé à l'observateur est comprise dans la gamme [-35° ;-55°] U [35° ; 55°] préférentiellement [-40° ;-50°] U [40° ; 50°], tandis que l'orientation du polariseur côté observateur est comprise dans la gamme [-70° ;-45°] U [25° ; 45°] préférentiellement [-65° ; -50°] U [25° ; 45°].

**13.** Dispositif selon l'une des revendications 1 à 5, **caractérisé par le fait que** l'angle que font les directions de brossage entre elles est compris entre 0° et 10°, le retard optique $\Delta nd$ = 200 +/- 40 nm et pour un cristal liquide levogyre, l'orientation du polariseur opposé à l'observateur est comprise dans la gamme [-65° ;-40°] U [25° ; 50°] préférentiellement [-60° ;-45°] U [30° ; 45°], tandis que l'orientation du polariseur côté observateur est comprise dans la gamme [-55° ;-25°] U [35° ; 65°] préférentiellement [-50° ; -30°] U [40° ; 60°].

**14.** Dispositif selon l'une des revendications 1 à 5, **caractérisé par le fait que** l'angle que font les directions de brossage entre elles est compris entre 0° et 10°, le retard optique $\Delta nd$ = 200 +/- 40 nm et pour un cristal liquide dextrogyre, l'orientation du polariseur opposé à l'observateur est comprise dans la gamme [-50° ;-25°] U [40° ; 65°] préférentiellement [-45° ;-30°] U [45° ; 60°], tandis que l'orientation du polariseur côté observateur est comprise dans la gamme [-65° ;-35°] U [25° ; 55°] préférentiellement [-60° ; -40°] U [30° ; 50°].

**15.** Dispositif selon l'une des revendications 1 à 5, **caractérisé par le fait que** l'angle que font les directions de brossage entre elles est compris entre 0° et 5°, le retard optique $\Delta nd$ = 280 +/- 40 nm et pour un cristal liquide levogyre, l'orientation du polariseur opposé à l'observateur est comprise dans la gamme [-70° ;-45°] U [20° ; 45°] préférentiellement [-65° ;-50°] U [25° ; 40°], tandis que l'orientation du polariseur côté observateur est comprise dans la gamme [-50° ;-25°] U [40° ; 65°] préférentiellement [-45° ; -30°] U [45° ; 60°].

**16.** Dispositif selon l'une des revendications 1 à 5, **caractérisé par le fait que** l'angle que font les directions de brossage entre elles est compris entre 0° et 5°, le retard optique $\Delta nd$ = 280 +/- 40 nm et pour un cristal liquide dextrogyre, l'orientation du polariseur opposé à l'observateur est comprise dans la gamme [-45° ;-20°] U [45° ; 70°] préférentiellement [-40° ;-25°] U [50° ; 65°], tandis que l'orientation du polariseur côté observateur est comprise dans la gamme [-65° ;-40°] U [25° ; 50°] préférentiellement [-60° ; -45°] U [30° ; 45°].

**17.** Dispositif selon l'une des revendications 1 à 16, **caractérisé par le fait que** le rapport entre l'épaisseur d de la cellule et le pas spontané $p_0$ des molécules de cristal liquide, est environ égal 0,25 +/- 0,1, de préférence 0,25 $\pm$ 0,05.

**18.** Procédé d'optimisation de l'orientation de deux polariseurs (10, 40) dans un dispositif d'affichage à cristal liquide nématique présentant deux états stables, sans champ électrique, obtenus par cassure d'ancrage, les deux états stables correspondant à deux textures de molécules de cristal liquide dont la torsion diffère de 150° à 180° en valeur absolue, **caractérisé par le fait qu'**il comprend les étapes consistant à calculer le pouvoir rotatoire de la cellule et à positionner les deux polariseurs (10, 40), l'un (10) placé côté observateur, l'autre (40) sur la face opposée de la cellule à cristal liquide, selon une orientation décalée d'une valeur égale au pouvoir rotatoire de la cellule +/- $\pi$ /2, le pouvoir rotatoire correspondant à l'effet de la texture la plus tordue.

**19.** Procédé selon la revendication 18, **caractérisé par le fait que** le pouvoir rotatoire PR est calculé sur la base de la relation :

$$PR \cong \phi - arctg\left(\frac{\phi}{X}tgX\right) \qquad\qquad [3]$$

avec

$$X(\phi, \lambda) = \sqrt{\phi^2 + \left(\frac{\pi\Delta nd}{\lambda}\right)^2} \qquad\qquad [2].$$

où $\lambda$ est une longueur d'onde, $\phi$ est la torsion et $\Delta nd$ est le retard optique de la cellule.

**20.** Procédé selon l'une des revendications 18 ou 19, **caractérisé par le fait qu'**il comprend les étapes consistant à:

- calculer le pouvoir rotatoire PR à l'aide d'une formule exploitant le retard optique $\Delta nd$, la torsion $\phi$ et la longueur d'onde $\lambda$,
- fixer l'orientation A du polariseur de sortie (10) placé côté observateur égale à P+PR+/-$\pi$/2, P représentant l'orientation du polariseur (40) côté opposé à l'observateur et PR le pouvoir rotatoire,

- rechercher les valeurs de P qui donnent la plus forte valeur de transmission résultante pour une torsion égale à $\phi$ +/- $\pi$ en cas d'ancrage azimuthal infini ou une torsion égale à $\phi$ +/- $\pi$ -2.DE tenant compte du décrochage élastique et

- en déduire A.

**21.** Procédé selon l'une des revendications 18 à 20, **caractérisé par le fait que** la valeur de la transmission est définie par la relation :

$$Tas(\phi, \lambda) = \cos^2(\alpha + \beta) - \cos^2 X \cos 2\alpha \cos 2\beta \left[\frac{\phi}{X}\tan X - \tan 2\alpha\right]\left[\frac{\phi}{X}\tan X + \tan 2\beta\right]$$

$\alpha$ et $\beta$ étant les angles que font respectivement le polariseur (40) sur la face opposée et le polariseur (10) côté observateur avec un directeur du cristal liquide respectivement situé du même côté, $\phi$ étant la torsion et $\Delta$nd le retard optique de la cellule, et $\lambda$ une longueur d'onde,

et avec : $X(\phi, \lambda) = \sqrt{\phi^2 + \left(\frac{\pi \Delta nd}{\lambda}\right)^2}$

**22.** Procédé selon l'une des revendications 18 à 21, **caractérisé par le fait que** le pouvoir rotatoire PR est calculé sur la base d'une valeur de torsion optimal $\phi$opt déterminé sur la base de la relation :

$$\phi_{opt} = \pi\sqrt{1 - \left(\frac{\Delta nd}{\lambda_0}\right)^2} \qquad\qquad [6].$$

où $\Delta$nd est le retard optique de la cellule et $\lambda_o$ est une longueur d'onde

**23.** Procédé selon l'une des revendications 18 à 22, **caractérisé par le fait que** le pouvoir rotatoire PR est calculé sur la base d'une valeur de torsion imposée par l'ancrage azimuthal.

**24.** Procédé selon l'une des revendications 18 à 23, **caractérisé par le fait qu'**il comprend une étape d'adaptation des angles des polariseurs pour améliorer la neutralité colorimétrique du blanc obtenu.

**25.** Procédé selon l'une des revendications 18 à 24, **caractérisé par le fait que** le pouvoir rotatoire PR est calculé sur la base d'une valeur de torsion qui intègre un décrochage (DE) résultant d'un ancrage azimuthal fini.

**Patentansprüche**

**1.** Nematische Flüssigkristallanzeigevorrichtung mit zwei stabilen Zuständen, ohne elektrisches Feld, die durch Ankerbruch erhalten werden, wobei die zwei stabilen Zustände zwei Texturen von Flüssigkristallmolekülen entsprechen, deren Verdrehung sich um 150° bis 180° Absolutwert unterscheidet, **dadurch gekennzeichnet, dass** sie zwei Polarisatoren (10, 40) umfasst, von denen einer (10) auf der Beobachterseite und der andere (40) auf der gegenüberliegenden Seite der Flüssigkristallzelle platziert ist, wobei die Orientierung der beiden Polarisatoren um einen Wert versetzt ist, der gleich der Drehleistung der Zelle +/- $\pi$2 ist, wobei die Drehleistung der Wirkung der Textur mit der größten Verdrehung entspricht.

**2.** Vorrichtung nach Anspruch 1, **dadurch gekennzeichnet, dass** die optische Verzögerung $\Delta$nd von der Größenordnung 240 +/- 80 nm ist.

**3.** Vorrichtung nach Anspruch 1 oder 2, **dadurch gekennzeichnet, dass** die Orientierung des gegenüber dem Beobachter platzierten Polarisators relativ zum nematischen Direktor auf der mit der Zelle assoziierten Fläche in der Region enthalten ist, die den Bereich +/- (20° bis 70°) umfasst, während die Orientierung des auf der Beobachterseite platzierten Polarisators relativ zu derselben nematischen Direktorreferenz in der Region enthalten ist, die den Bereich +/- (20° bis 70°) umfasst.

4. Vorrichtung nach einem der Ansprüche 1 bis 3, **dadurch gekennzeichnet, dass** für einen linksdrehenden Flüssigkristall die Orientierung des gegenüber dem Beobachter platzierten Polarisators in der Region liegt, die die Bereiche -70° bis -40° und 20° bis 55° umfasst, während die Orientierung des auf der Beobachterseite platzierten Polarisators in der Region liegt, die die Bereiche -55° bis -20° und 35° bis 70° umfasst, und für einen rechtsdrehenden Flüssigkristall die Orientierung des gegenüber dem Beobachter platzierten Polarisators in der Region liegt, die die Bereiche -55° bis -20° und 40° bis 70° umfasst, während die Orientierung des auf der Beobachterseite platzierten Polarisators in der Region liegt, die die Bereiche -70° bis -35° und 20° bis 55° umfasst.

5. Vorrichtung nach einem der Ansprüche 1 bis 4, **dadurch gekennzeichnet, dass** der Verdrehwinkel der Moleküle in einem der zwei stabilen Zustände zwischen 0° und 15° liegt.

6. Vorrichtung nach einem der Ansprüche 1 bis 5, **dadurch gekennzeichnet, dass** der Verdrehwinkel der Moleküle in einem der zwei stabilen Zustände zwischen 0° und 15° liegt, die optische Verzögerung $\Delta$nd = 200 +/- 40 nm ist und für einen linksdrehenden Flüssigkristall die Orientierung des Polarisators gegenüber dem Beobachter in der Region [-60°; -40°] U [30°; 50°] liegt, während die Orientierung des Polarisators auf der Beobachterseite in der Region [-50°; -25°] U [40°; 70°] liegt.

7. Vorrichtung nach einem der Ansprüche 1 bis 5, **dadurch gekennzeichnet, dass** der Verdrehwinkel der Moleküle in einem der zwei stabilen Zustände zwischen 0° und 15° liegt, die optische Verzögerung $\Delta$nd = 200 +/- 40 nm ist und für einen rechtsdrehenden Flüssigkristall die Orientierung des Polarisators gegenüber dem Beobachter in der Region [-50°; -30 ∪ [40°; 60°] liegt, während die Orientierung des Polarisators auf der Beobachterseite in der Region [-70°; -40°] U [25°; 50°] liegt.

8. Vorrichtung nach Anspruch 6 oder 7 in Abhängigkeit von Anspruch 1 oder den Ansprüchen 3 bis 5, **dadurch gekennzeichnet, dass** die optische Verzögerung $\Delta$nd in der Größenordnung von 210 $\pm$ 50 nm ist.

9. Vorrichtung nach einem der Ansprüche 1 bis 5, **dadurch gekennzeichnet, dass** der Verdrehwinkel der Moleküle in einem der zwei stabilen Zustände zwischen 0° und 15° liegt, die optische Verzögerung $\Delta$nd = 28° +/- 40 nm ist und für einen linksdrehenden Flüssigkristall die Orientierung des Polarisators gegenüber dem Beobachter in der Region [-65°; -45°] U [25°; 50°] liegt, während die Orientierung des Polarisators auf der Beobachterseite in der Region [-50°; -20°] U [40°; 70°] liegt.

10. Vorrichtung nach einem der Ansprüche 1 bis 5, **dadurch gekennzeichnet, dass** der Verdrehwinkel der Moleküle in einem der zwei stabilen Zustände zwischen 0° und 15° liegt, die optische Verzögerung $\Delta$nd = 280 +/- 40 nm ist und für einen rechtsdrehenden Flüssigkristall die Orientierung des Polarisators gegenüber dem Beobachter in der Region [-50°; -25°] U [45°; 65°] liegt, während die Orientierung des Polarisators auf der Beobachterseite in der Region [-70°; -40°] U [20°; 50°] liegt.

11. Vorrichtung nach einem der Ansprüche 1 bis 5, **dadurch gekennzeichnet, dass** der Winkel zwischen den Abstreichrichtungen zwischen 10° und 15° liegt, die optische Verzögerung $\Delta$nd = 200 +/- 40 nm ist und für einen linksdrehenden Flüssigkristall die Orientierung des Polarisators gegenüber dem Beobachter in der Region [-55°; -35°] U [35°; 55°], vorzugsweise [-40°; -50°] U [40°; 50°] liegt, während die Orientierung des Polarisators auf der Beobachterseite in der Region [-45°; -25°] U [45°; 70°], vorzugsweise [-45°; -25°] U [50°; 65°] liegt.

12. Vorrichtung nach einem der Ansprüche 1 bis 5, **dadurch gekennzeichnet, dass** der Winkel zwischen den Abstreichrichtungen zwischen 10° und 15° liegt, die optische Verzögerung $\Delta$nd = 200 +/- 40 nm ist und für einen rechtsdrehenden Flüssigkristall die Orientierung des Polarisators gegenüber dem Beobachter in der Region [-35°; -55°] U [35°; 55°], vorzugsweise [-40°; -50°] U [40°; 50°] liegt, während die Orientierung des Polarisators auf der Beobachterseite in der Region [-70°; -45°] U [25°; 45°], vorzugsweise [-65°; -50°] U [25°; 45°] liegt.

13. Vorrichtung nach einem der Ansprüche 1 bis 5, **dadurch gekennzeichnet, dass** der Winkel zwischen den Abstreichrichtungen zwischen 0° und 10° liegt, die optische Verzögerung $\Delta$nd = 200 +/- 40 nm ist und für einen linksdrehenden Flüssigkristall die Orientierung des Polarisators gegenüber dem Beobachter in der Region [-65°; -40°] U [25°; 50°], vorzugsweise [-60°; -45°] U [30°; 45°] liegt, während die Orientierung des Polarisators auf der Beobachterseite in der Region [-55°; -25°] U [35°; 65°], vorzugsweise [-50°; -30°] U [40°; 60°] liegt.

**14.** Vorrichtung nach einem der Ansprüche 1 bis 5, **dadurch gekennzeichnet, dass** der Winkel zwischen den Abstreichrichtungen zwischen 0° und 10° liegt, die optische Verzögerung Δnd = 200 +/- 40 nm ist und für einen rechtsdrehenden Flüssigkristall die Orientierung des Polarisators gegenüber dem Beobachter in der Region [-50°; -25°] U [40°; 65°], vorzugsweise [-45°; -30°] U [45°; 60°] liegt, während die Orientierung des Polarisators auf der Beobachterseite in der Region [-65°; -35°] U [25°; 55°], vorzugsweise [-60°; -40°] U [30°; 50°] liegt.

**15.** Vorrichtung nach einem der Ansprüche 1 bis 5, **dadurch gekennzeichnet, dass** der Winkel zwischen den Abstreichrichtungen zwischen 0° und 5° liegt, die optische Verzögerung Δnd = 28° +/- 40 nm ist und für einen linksdrehenden Flüssigkristall die Orientierung des Polarisators gegenüber dem Beobachter in der Region [-70°; -45°] U [20°; 45°], vorzugsweise [-65°; -50°] U [25°; 40°] liegt, während die Orientierung des Polarisators auf der Beobachterseite in der Region [-50°; -25°] U [40°; 65°], vorzugsweise [-45°; -30°] U [45°; 60°] liegt.

**16.** Vorrichtung nach einem der Ansprüche 1 bis 5, **dadurch gekennzeichnet, dass** der Winkel zwischen den Abstreichrichtungen zwischen 0° und 5° liegt, die optische Verzögerung Δnd = 280 +/- 40 nm ist und für einen rechtsdrehenden Flüssigkristall die Orientierung des Polarisators gegenüber dem Beobachter in der Region [-45°; -20°] U [45°; 70°], vorzugsweise [-40°; -25°] U [50°; 65°] liegt, während die Orientierung des Polarisators auf der Beobachterseite in der Region [-65°; -40°] U [25°; 50°], vorzugsweise [-60°; -45°] U [30°; 45°] liegt.

**17.** Vorrichtung nach einem der Ansprüche 1 bis 16, **dadurch gekennzeichnet, dass** das Verhältnis zwischen der Dicke d der Zelle und dem spontanen Schritt $p_0$ der Flüssigkristallmoleküle etwa gleich 0,25 +/- 0,1, vorzugsweise 0,25 ± 0,05 beträgt.

**18.** Verfahren zum Optimieren der Orientierung von zwei Polarisatoren (10, 40) in einer nematischen Flüssigkristallanzeigevorrichtung mit zwei stabilen Zuständen, ohne elektrisches Feld, die durch Ankerbruch erhalten werden, wobei die zwei stabilen Zustände zwei Texturen von Flüssigkristallmolekülen entsprechen, deren Verdrehung sich um 150° bis 180° Absolutwert unterscheidet, **dadurch gekennzeichnet, dass** es Schritte beinhaltet, die das Berechnen der Drehleistung der Zelle und das Positionieren von zwei Polarisatoren (10, 40) beinhaltet, von denen einer (10) auf der Beobachterseite und der andere (40) auf der Fläche gegenüber der Flüssigkristallzelle platziert ist, gemäß einer Orientierung, die um einen Wert versetzt ist, der gleich der Drehleistung der Zelle +/- π2 ist, wobei die Drehleistung der Wirkung der Textur mit der größten Verdrehung entspricht.

**19.** Verfahren nach Anspruch 18, **dadurch gekennzeichnet, dass** die Drehleistung PR auf der Basis der folgenden Beziehung berechnet wird:

$$PR \cong \phi - arctg\left(\frac{\phi}{X}tgX\right) \qquad [3]$$

dabei ist

$$X(\phi,\lambda) = \sqrt{\phi^2 + \left(\frac{\pi\Delta nd}{\lambda}\right)^2} \qquad [2]$$

wobei λ eine Wellenlänge, Φ die Verdrehung und Δnd die optische Verzögerung der Zelle ist.

**20.** Verfahren nach Anspruch 18 oder 19, **dadurch gekennzeichnet, dass** es die folgenden Schritte beinhaltet:

- Berechnen der Drehleistung PR mit einer Formel, die die optische Verzögerung Δnd, die Verdrehung Φ und die Wellenlänge λ benutzt;
- Festlegen der Orientierung A des Ausgangspolarisators (10), der auf der Beobachterseite platziert ist, auf gleich P+PR+/- π/2, wobei P die Orientierung des Polarisators (40) gegenüber dem Beobachter und PR die Drehleistung repräsentieren;
- Suchen der Werte von P, die den höchsten Transmissionswert ergeben, der von einer Verdrehung resultiert, die gleich Φ +/- π im Falle einer unendlichen Azimutverankerung ist, oder einer Verdrehung, die gleich Φ +/- π -2.DE unter Berücksichtigung der elastischen Entankerung ist; und

- Ableiten von A davon.

**21.** Verfahren nach einem der Ansprüche 18 bis 20, **dadurch gekennzeichnet, dass** der Wert der Transmission durch die folgende Relation definiert wird:

$$Tas(\phi, \lambda) = \cos^2(\alpha + \beta) - \cos^2 X \cos 2\alpha \cos 2\beta \left[ \frac{\phi}{X} \tan X - \tan 2\alpha \right] \left[ \frac{\phi}{X} \tan X + \tan 2\beta \right]$$

wobei $\alpha$ und $\beta$ die Winkel sind, die jeweils von dem Polarisator (40) auf der gegenüberliegenden Fläche und dem Polarisator (10) auf der Beobachterseite mit einem Flüssigkristalldirektor gebildet werden, der sich jeweils auf derselben Seite befindet, wobei $\Phi$ die Verdrehung ist und $\Delta$nd die optische Verzögerung der Zelle ist und $\lambda$ eine Wellenlänge ist, und wobei $X(\phi, \lambda) = \sqrt{\phi^2 + \left( \frac{\pi \Delta nd}{\lambda} \right)^2}$.

**22.** Verfahren nach einem der Ansprüche 18 bis 21, **dadurch gekennzeichnet, dass** die Drehleistung PR auf der Basis eines optimalen Verdrehungswertes $\Phi$opt berechnet wird, der auf der Basis der folgenden Relation bestimmt wird:

$$\phi_{opt} = \pi \sqrt{1 - \left( \frac{\Delta nd}{\lambda_0} \right)^2} \qquad [6].$$

wobei $\Delta$nd die optische Verzögerung der Zelle und $\lambda_0$ eine Wellenlänge ist.

**23.** Verfahren nach einem der Ansprüche 18 bis 22, **dadurch gekennzeichnet, dass** die Drehleistung PR auf der Basis eines Verdrehwertes berechnet wird, der von der Azimutverankerung auferlegt wird.

**24.** Verfahren nach einem der Ansprüche 18 bis 23, **dadurch gekennzeichnet, dass** es einen Schritt des Adaptierens der Winkel der Polarisatoren beinhaltet, um die kolorimetrische Neutralität des erhaltenen Weiß zu verbessern.

**25.** Verfahren nach einem der Ansprüche 18 bis 24, **dadurch gekennzeichnet, dass** die Drehleistung PR auf der Basis eines Verdrehwertes berechnet wird, der eine Entankerung (DE) integriert, die von einer finiten Azimutverankerung resultiert.

**Claims**

**1.** A nematic liquid crystal display device with two stable states, without an electric field, obtained by anchor-breaking, said two stable states corresponding to two textures of liquid crystal molecules, the twist of which differs by 150° to 180° in absolute value, **characterised in that** it comprises two polarisers (10, 40), one (10) of which is placed on the observer side, the other (40) of which is placed on the opposite face of the liquid crystal cell, with the orientation of said two polarisers being offset by a value that is equal to the rotatory power of said cell +/- $\pi$2, said rotatory power corresponding to the effect of the texture with the greatest twist.

**2.** The device according to claim 1, **characterised in that** the optical delay $\Delta$nd is of the order of 240 +/- 80 nm.

**3.** The device according to claim 1 or 2, **characterised in that** the orientation of the polariser placed opposite said observer, relative to the nematic director on the associated face of said cell, is included within the region comprising the range +/- (20° to 70°), whereas the orientation of the polariser placed on the observer side, relative to the same nematic director reference, is included within the region comprising the range +/- (20° to 70°).

**4.** The device according to any one of claims 1 to 3, **characterised in that**, for a levorotatory liquid crystal, the orientation of the polariser placed opposite the observer is within the region comprising the ranges -70° to -40° and 20° to 55°, whereas the orientation of the polariser placed on the observer side is within the region comprising the ranges -55° to -20° and 35° to 70°, and, for a dextro-rotatory liquid crystal, the orientation of the polariser placed opposite the observer is within the region comprising the ranges - 55° to -20° and 40° to 70°, whereas the orientation of the polariser placed on the observer side is within the region comprising the ranges -70° to -35° and 20° to 55°.

5. The device according to any one of claims 1 to 4, **characterised in that** the twist angle of the molecules in one of said two stable states is between 0° and 15°.

6. The device according to any one of claims 1 to 5, **characterised in that** the twist angle of the molecules in one of said two stable states is between 0° and 15°, the optical delay $\Delta$nd = 200 +/- 40 nm and, for a levorotatory liquid crystal, the orientation of the polariser opposite the observer is within the region [-60°; -40°] U [30°; 50°], whereas the orientation of the polariser on the observer side is within the region [-50°; -25°] U [40°; 70°].

7. The device according to any one of claims 1 to 5, **characterised in that** the twist angle of the molecules in one of said two stable states is between 0° and 15°, the optical delay $\Delta$nd = 200 +/- 40 nm and, for a dextro-rotatory liquid crystal, the orientation of the polariser opposite the observer is within the region [-50°; -30°] U [40°; 60°], whereas the orientation of the polariser on the observer side is within the region [-70°; -40°] U [25°; 50°].

8. The device according to claim 6 or 7 as dependent on claim 1 or of claims 3 to 5, **characterised in that** the optical delay $\Delta$nd is of the order of 210 $\pm$ 50 nm.

9. The device according to any one of claims 1 to 5, **characterised in that** the twist angle of the molecules in one of said two stable states is between 0° and 15°, the optical delay $\Delta$nd = 280 +/- 40 nm and, for a levorotatory liquid crystal, the orientation of the polariser opposite the observer is within the region [-65°; -45°] U [25°; 50°], whereas the orientation of the polariser on the observer side is within the region [-50°; -20°] U [40°; 70°].

10. The device according to any one of claims 1 to 5, **characterised in that** the twist angle of the molecules in one of said two stable states is between 0° and 15°, the optical delay $\Delta$nd = 280 +/- 40 nm and, for a dextro-rotatory liquid crystal, the orientation of the polariser opposite the observer is within the region [-50°; -25°] U [45°; 65°], whereas the orientation of the polariser on the observer side is within the region [-70°; -40°] U [20°; 50°].

11. The device according to any one of claims 1 to 5, **characterised in that** the angle formed by the sweeping directions is between 10° and 15°, the optical delay $\Delta$nd = 200 +/-40 nm and, for a levorotatory liquid crystal, the orientation of the polariser opposite the observer is within the region [-55°; -35°] U [35°; 55°], preferably [-40°; -50°] U [40°; 50°], whereas the orientation of the polariser on the observer side is within the region [-45°;-25°] U [45°; 70°], preferably [-45°; -25°] U [50°; 65°].

12. The device according to any one of claims 1 to 5, **characterised in that** the angle formed by the sweeping directions is between 10° and 15°, the optical delay $\Delta$nd = 200 +/-40 nm and, for a dextro-rotatory liquid crystal, the orientation of the polariser opposite the observer is within the region [-35°; -55°] U [35°; 55°], preferably [-40°; -50°] U [40°; 50°], whereas the orientation of the polariser on the observer side is within the region [-70°; - 45°] U [25°; 45°], preferably [-65°; -50°] U [25°; 45°].

13. The device according to any one of claims 1 to 5, **characterised in that** the angle formed by the sweeping directions is between 0° and 10°, the optical delay $\Delta$nd = 200 +/-40 nm and, for a levorotatory liquid crystal, the orientation of the polariser opposite the observer is within the region [-65°; -40°] U [25°; 50°], preferably [-60°; -45°] U [30°; 45°], whereas the orientation of the polariser on the observer side is within the region [-55°;-25°] U [35°; 65°], preferably [-50°; -30°] U [40°; 60°].

14. The device according to any one of claims 1 to 5, **characterised in that** the angle formed by the sweeping directions is between 0° and 10°, the optical delay $\Delta$nd = 200 +/-40 nm and, for a dextro-rotatory liquid crystal, the orientation of the polariser opposite the observer is within the region [-50°; -25°] U [40°; 65°], preferably [-45°; -30°] U [45°; 60°], whereas the orientation of the polariser on the observer side is within the region [-65°;-35°] U [25°; 55°], preferably [-60°; -40°] U [30°; 50°].

15. The device according to any one of claims 1 to 5, **characterised in that** the angle formed by the sweeping directions is between 0° and 5°, the optical delay $\Delta$nd = 280 +/-40  nm and, for a levorotatory liquid crystal, the orientation of the polariser opposite the observer is within the region [-70°; -45°] U [20°; 45°], preferably [-65°; -50°] U [25°; 40°], whereas the orientation of the polariser on the observer side is within the region [-50°;-25°] U [40°; 65°], preferably [-45°; -30°] U [45°; 60°].

16. The device according to any one of claims 1 to 5, **characterised in that** the angle formed by the sweeping directions is between 0° and 5°, the optical delay $\Delta$nd = 280 +/-40 nm and, for a dextro-rotatory liquid crystal, the orientation of the polariser opposite the observer is within the region [-45°; -20°] U [45°; 70°], preferably [-40°; -25°] U [50°; 65°], whereas the orientation of the polariser on the observer side is within the region [-65°;-40°] U [25°; 50°], preferably [-60°; -45°] U [30°; 45°].

17. The device according to any one of claims 1 to 16, **characterised in that** the ratio between the thickness d of said cell and the spontaneous step $p_0$ of the liquid crystal molecules is approximately equal to 0.25 +/- 0.1, preferably 0.25 $\pm$ 0.05.

18. A method for optimising the orientation of two polarisers (10, 40) in a nematic liquid crystal display device with two stable states, without an electric field, obtained by anchor-breaking, with said two states corresponding to two textures of liquid crystal molecules, the twist of which differs by 150° to 180° in absolute value, **characterised in that** it comprises steps that involve calculating the rotatory power of said cell and positioning said two polarisers (10, 40), one (10) of which is placed on the observer side, the other (40) of which is placed on the opposite face of the liquid crystal cell, according to an orientation that is offset by a value that is equal to the rotatory power of said cell +/$\pi$2, with said rotatory power corresponding to the effect of the texture with the greatest twist.

19. The method according to claim 18, **characterised in that** said rotatory power PR is calculated on the basis of the following relation:

$$PR \cong \phi - arctg\left(\frac{\phi}{X}tgX\right) \qquad\qquad [3]$$

with

$$X(\phi,\lambda) = \sqrt{\phi^2 + \left(\frac{\pi\Delta nd}{\lambda}\right)^2} \qquad\qquad [2]$$

where $\lambda$ is a wavelength, $\Phi$ is the twist and $\Delta$nd is the optical delay of said cell.

20. The method according to claim 18 or 19, **characterised in that** it comprises the following steps:

   - calculating said rotatory power PR using a formula that uses the optical delay $\Delta$nd, the twist $\Phi$ and the wavelength $\lambda$;
   - setting the orientation A of the output polariser (10), placed on the observer side, so that it is equal to P+PR+/-$\pi$/2, with P representing the orientation of the polariser (40) opposite the observer and PR representing the rotatory power;
   - finding the values of P that provide the highest transmission value resulting from a twist that is equal to $\Phi$ +/-$\pi$ in the case of infinite azimuth anchoring or a twist that is equal to $\Phi$ +/- $\pi$ -2.DE taking into account the elastic de-anchoring; and
   - deducing A therefrom.

21. The method according to any one of claims 18 to 20, **characterised in that** the value of the transmission is defined by the following relation:

$$Tas(\phi,\lambda) = \cos^2(\alpha+\beta) - \cos^2 X \cos 2\alpha \cos 2\beta \left[\frac{\phi}{X}\tan X - \tan 2\alpha\right]\left[\frac{\phi}{X}\tan X + \tan 2\beta\right]$$

with $\alpha$ and $\beta$ being the angles respectively formed by said polariser (40) on the opposite face and said polariser (10) on the observer side with a liquid crystal director respectively located on the same side, with $\Phi$ being the twist and $\Delta$nd being the optical delay of said cell and $\lambda$ being a wavelength, and with:

$$X(\phi, \lambda) = \sqrt{\phi^2 + \left(\frac{\pi \Delta nd}{\lambda}\right)^2}$$

**22.** The method according to any one of claims 18 to 21, **characterised in that** said rotatory power PR is calculated on the basis of an optimal twist value Φopt that is determined on the basis of the following relation:

$$\phi_{opt} = \pi \sqrt{1 - \left(\frac{\Delta nd}{\lambda_0}\right)^2} \qquad\qquad [6].$$

where $\Delta$nd is the optical delay of said cell and $\lambda_0$ is a wavelength.

**23.** The method according to any one of claims 18 to 22, **characterised in that** said rotatory power PR is calculated on the basis of a twist value that is imposed by the azimuthal anchoring.

**24.** The method according to any one of claims 18 to 23, **characterised in that** it comprises a step of adapting the angles of the polarisers in order to improve the colorimetric neutrality of the white that is obtained.

**25.** The method according to any one of claims 18 to 24, **characterised in that** said rotatory power PR is calculated on the basis of a twist value that integrates a de-anchoring (DE) resulting from a finite azimuthal anchoring.

# FIG.1

## FIG.2

**2a**

Longueur d'onde nm

**2b**

Longueur d'onde nm

# FIG.3

# FIG.4

PR° pour Φopt

biréfringence Δn.d(nm)

# FIG.5

## 5a

Longueur d'onde nm

## 5b

Longueur d'onde nm

## FIG.6

Molécules de cristal liquide
sur la couche d'alignement

$\phi$

$\phi_U$

Direction de brossage
côté polariseur

$\phi_T$

Direction de brossage
côté analyseur

## FIG.7

PR° pour $\Phi$ =-180°

povoir rotatoire (°)

biréfringence $\Delta n.d(nm)$

# FIG.8

## FIG.9

9a

9b

# FIG.10

## 10a

## 10b

# FIG.11

DE

φ*

φ<sub>U</sub>

Direction de
brossage côté
analyseur

Direction de brossage
côté polariseur

Ancrage azimutal
infiniment fort :
Molécule // direction
de brossage

φ<sub>T</sub>

DE

Ancrage azimutal fini:
Molécule « décroche »
d'un angle DE

## RÉFÉRENCES CITÉES DANS LA DESCRIPTION

**Documents brevets cités dans la description**

- FR 2740894 A

- US 20030076455 A

**Littérature non-brevet citée dans la description**

- Fast bistable nematic display using monostable surface anchoring witching. *Proceeding SID,* 1997, 41-44
- recents improvements of bistable nematic displays switched by anchoring breaking. *SPIE,* 1997, vol. 3015, 61-69
- Dynamic flow, broken surface anchoring, and switching bistability in three-terminal twisted nematic liquid crystal displays. *Journal of Applied Physics,* 2001, vol. 90 (6), 3121-3123

- Three terminal bistable twisted nematic liquid crystal displays. *Applied Physics letters,* Décembre 2000, vol. 77 (23), 3716-3718
- **H.L. ONG.** Origin and characteristics of the optical properties of general twisted nematic liquid crystal displays. *J. Appl. Phys.,* 1988, vol. 64, 614
- **P. YEH ; C. GU.** *Optics of liquid crystal displays,* 1999
- **POINCARE H.** théorie mathématique de la lumière. Gauthiers Villars, 1989
- **SCHURCLIFF W.A.** Polarized light, production and use. Harvard University Press, 1966